# EUROPEAN PATENT APPLICATION

(11) **EP 4 827 093 A1**
(43) Date of publication of application: **21.10.2026**
(21) Application number: 24917754.4
(22) Date of filing: 18.01.2024
(51) Int. Cl.: H04N 19/46

(54) **IMAGE ENCODING METHOD, IMAGE DECODING METHOD AND RELATED DEVICE**

(71) Applicant: Huawei Technologies Co., Ltd., Shenzhen, Guangdong 518129 (CN)
(72) Inventor: YOU, Hongjie, Shenzhen, Guangdong 518129 (CN); ALSHINA, Elena Alexandrovna, Shenzhen, Guangdong 518129 (CN); XU, Weiwei, Shenzhen, Guangdong 518129 (CN)
(74) Representative: Eisenführ Speiser
(86) International application number: PCT/CN2024/073143
(87) International publication number: WO 2025/152130

(57) **Abstract**

This application discloses an image encoding method, applied to the field of data processing technologies. The image encoding method includes: encoding a target image into a bitstream; and encoding a first identifier into the bitstream, where the first identifier indicates an optical-electro transfer function that matches the target image, and the target image includes a high dynamic range HDR image and/or a standard dynamic range SDR image. In other words, when the target image is encoded in this application, the first identifier indicating the optical-electro transfer function that matches the target image may also be encoded into the bitstream, to meet a display requirement of both the SDR image and the HDR image on a decoder side, so that after obtaining the first identifier through decoding, a decoder can render and display the reconstructed image according to the corresponding optical-electro transfer function.

## Description

### TECHNICAL FIELD

This application relates to the field of data processing technologies, and in particular, to image encoding and decoding methods and related apparatuses.

### BACKGROUND

JPEG-AI is an image encoding and decoding standard based on machine learning. A JPEG-AI-based encoding and decoding solution is based on a self-encoder structure with color component separation, and a primary component and a secondary component of an image are encoded and decoded separately to implement image encoding and decoding.

A JPEG-AI-based image encoding process is as follows: An image in an RGB (a color space, where R indicates red, G indicates green, and B indicates blue) format is converted into an image in a YUV (a color space, where Y indicates luma, and U and V indicate chroma) format through color space conversion; then downsampling processing is separately performed on an image of a Y component and an image of a UV component, to reduce a data processing amount; and then a downsampling-processed image of the Y component and a downsampling-processed image of the UV component are separately encoded to obtain a bitstream of the Y component and a bitstream of the UV component. A JPEG-AI-based image decoding process is as follows: The bitstream of the Y component and the bitstream of the UV component are separately parsed to obtain a reconstructed image of the Y component and a reconstructed image of the UV component; then upsampling processing is separately performed on the reconstructed image of the Y component and the reconstructed image of the UV component to obtain a reconstructed image in the YUV format; and finally, the reconstructed image in the YUV format is converted into a reconstructed image in the RGB format through inverse color space conversion.

However, when the image in the RGB format is displayed after decoding, the JPEG-AI performs processing according to an optical-electro transfer function based on the Gamma function by default. The optical-electro transfer function exhibits favorable performance in displaying a standard dynamic range (standard dynamic range, SDR) image on a conventional display device (illumination is about 100 cd/m²). However, for a high dynamic range (high dynamic range, HDR) image, the optical-electro transfer function cannot be used to accurately display an HDR image on the display device.

### SUMMARY

Embodiments of this application provide image encoding and decoding methods and related apparatuses, to accurately display an HDR image.

According to a first aspect, an image encoding method is provided, including: encoding a target image into a bitstream; and encoding a first identifier into the bitstream, where the first identifier indicates an optical-electro transfer function that matches the target image, and the target image includes a high dynamic range HDR image and/or a standard dynamic range SDR image.

Optionally, the bitstream includes a picture header, and the first identifier is encoded into the picture header.

Optionally, the method further includes: encoding a second identifier into the bitstream, where the second identifier indicates chroma coordinates of each primary color of the target image; encoding a third identifier into the bitstream, where the third identifier indicates a pixel mapping range of the target image; and encoding a fourth identifier into the bitstream, where the fourth identifier indicates a coefficient of a conversion matrix used for performing color space conversion on the target image.

Optionally, before encoding the target image into the bitstream, the method further includes: performing color space conversion on the target image based on the second identifier, the third identifier, and the fourth identifier.

Optionally, the bitstream includes a picture header, and the second identifier, the third identifier, and the fourth identifier are encoded into the picture header.

Optionally, the method further includes: encoding a fifth identifier into the bitstream, where the fifth identifier indicates an offset status of sampling positions of a primary component of the target image and a secondary component of the target image.

Optionally, after color space conversion is performed on the target image, the target image includes an image of the primary component and an image of the secondary component; and before encoding the target image into the bitstream, the method further includes: performing downsampling on the image of the primary component and the image of the secondary component based on the fifth identifier; and encoding the target image into the bitstream includes: encoding a downsampled image of the primary component and a downsampled image of the secondary component into the bitstream.

Optionally, the bitstream includes a picture header, and the fifth identifier is encoded into the picture header.

Optionally, the method further includes: encoding static metadata of the target image into the bitstream, where the static metadata includes source device information and image display information, the source device information indicates color information of a mastering monitor that generates the target image, and the image display information indicates display luma of the target image.

Optionally, the source device information includes at least one of chroma coordinates of three primary colors, chroma coordinates of standard white light, maximum display luma, and minimum display luma of the mastering monitor.

Optionally, the image display information includes at least one of maximum display luma or maximum average display luma of the target image.

Optionally, the bitstream includes a picture header, and the picture header carries the static metadata; or the bitstream includes a metadata header, and the metadata header carries the static metadata; or the bitstream includes a metadata substream corresponding to a metadata header, and the metadata substream carries the static metadata.

Optionally, the method further includes: encoding dynamic metadata of the target image into the bitstream, where the dynamic metadata includes color gamut volume change data of the target image.

Optionally, the bitstream includes a picture header, and the picture header carries the dynamic metadata; or the bitstream includes a metadata header, and the metadata header carries the dynamic metadata; or the bitstream includes a metadata substream corresponding to a metadata header, and the metadata substream carries the dynamic metadata.

In conclusion, when the target image is encoded, the first identifier indicating the optical-electro transfer function that matches the target image may also be encoded into the bitstream, to meet a display requirement of both the SDR image and the HDR image on a decoder side, so that after obtaining the first identifier through decoding, a decoder can render and display the reconstructed image according to the corresponding optical-electro transfer function.

According to a second aspect, an image decoding method is provided, including: parsing a bitstream to obtain a first identifier where the first identifier indicates an optical-electro transfer function that matches a target image, and the target image includes a high dynamic range HDR image and/or a standard dynamic range SDR image; decoding the bitstream to obtain a reconstructed image of the target image; and performing electro-to-optical conversion on the reconstructed image based on the first identifier.

Optionally, the bitstream includes a picture header, and the first identifier is carried in the picture header.

Optionally, the method further includes: parsing the bitstream to obtain a second identifier, where the second identifier indicates chroma coordinates of each primary color of the target image; parsing the bitstream to obtain a third identifier, where the third identifier indicates a mapping range of the target image; and parsing the bitstream to obtain a fourth identifier, where the fourth identifier indicates a coefficient of a conversion matrix used for performing color space conversion on the target image.

Optionally, before performing electro-to-optical conversion on the reconstructed image based on the first identifier, the method further includes: performing inverse color space conversion on the reconstructed image based on the second identifier, the third identifier, and the fourth identifier.

Optionally, the bitstream includes a picture header, and the second identifier, the third identifier, and the fourth identifier are carried in the picture header.

Optionally, the method further includes: parsing the bitstream to obtain a fifth identifier, where the fifth identifier indicates an offset status of sampling positions of a primary component of the target image and a secondary component of the target image.

Optionally, parsing the bitstream to obtain the reconstructed image of the target image includes: parsing the bitstream to obtain a reconstructed image of the primary component of the target image and a reconstructed image of the secondary component of the target image; and performing upsampling on the reconstructed image of the primary component and the reconstructed image of the secondary component based on the fifth identifier to obtain the reconstructed image.

Optionally, the bitstream includes a picture header, and the fifth identifier is carried in the picture header.

Optionally, the method further includes: parsing the bitstream to obtain static metadata of the target image, where the static metadata includes source device information and image display information, the source device information indicates color information of a mastering monitor that generates the target image, and the image display information indicates display luma of the target image.

Optionally, the method further includes: performing tone mapping on the reconstructed image based on the static metadata.

Optionally, the source device information includes at least one of chroma coordinates of three primary colors, chroma coordinates of standard white light, maximum display luma, and minimum display luma of the mastering monitor.

Optionally, the image display information includes at least one of maximum display luma or maximum average display luma of the target image.

Optionally, the bitstream includes a picture header, and the picture header carries the static metadata; or the bitstream includes a metadata header, and the metadata header carries the static metadata; or the bitstream includes a metadata substream corresponding to a metadata header, and the metadata substream carries the static metadata.

Optionally, the method further includes: parsing the bitstream to obtain dynamic metadata of the target image, where the dynamic metadata includes color gamut volume change data of the target image.

Optionally, the method further includes: performing tone mapping on the reconstructed image based on the static metadata and the dynamic metadata.

Optionally, the bitstream includes a picture header, and the picture header carries the dynamic metadata; or the bitstream includes a metadata header, and the metadata header carries the dynamic metadata; or the bitstream includes a metadata substream corresponding to a metadata header, and the metadata substream carries the dynamic metadata.

In conclusion, when the bitstream is decoded, the optical-electro transfer function that matches the target image may be determined based on the first identifier obtained through decoding, so that the reconstructed image of the target image is accurately rendered and displayed according to the optical-electro transfer function, to meet a display requirement of both the SDR image and the HDR image on a decoder side, and ensure accuracy of displaying the target image.

According to a third aspect, an encoding device is provided. The encoding device has a function of implementing behavior of the image encoding method according to the first aspect. The encoding device includes at least one module, and the at least one module is configured to implement the image encoding method according to the first aspect.

According to a fourth aspect, a decoding device is provided. The decoding device has a function of implementing behavior of the image decoding method according to the second aspect. The decoding device includes at least one module, and the at least one module is configured to implement the image decoding method according to the second aspect.

According to a fifth aspect, an encoding device is provided. The encoding device includes a processor, the processor is coupled to a memory, the memory is configured to store a program or instructions, and when the program or the instructions are executed by the processor, the encoding device is enabled to perform the image encoding method according to the first aspect.

According to a sixth aspect, a decoding device is provided. The decoding device includes a processor, the processor is coupled to a memory, the memory is configured to store a program or instructions, and when the program or the instructions are executed by the processor, the decoding device is enabled to perform the image decoding method according to the second aspect.

According to a seventh aspect, an encoding and decoding system is provided. The encoding and decoding system includes the encoding device according to the fifth aspect and/or the decoding device according to the sixth aspect.

According to an eighth aspect, a computer-readable storage medium is provided, including program code. When the program code is run on a computer, the computer is enabled to perform the method according to the first aspect.

According to a ninth aspect, a computer-readable storage medium is provided, including program code. When the program code is run on a computer, the computer is enabled to perform the method according to the second aspect.

According to a tenth aspect, a computer program product is provided, including instructions. When the instructions are run on a computer, the computer is enabled to perform the method according to the first aspect.

According to an eleventh aspect, a computer program product is provided, including instructions. When the instructions are run on a computer, the computer is enabled to perform the method according to the second aspect.

According to a twelfth aspect, a computer-readable storage medium is provided. The computer-readable storage medium stores a bitstream obtained according to the method according to the first aspect.

According to a thirteenth aspect, a device for storing a bitstream is provided, including at least one storage medium and a communication interface. The communication interface is configured to receive or send a bitstream. The at least one storage medium is configured to store the bitstream. The bitstream is obtained by an encoder through encoding according to the image encoding method according to the first aspect.

According to a fourteenth aspect, a bitstream storage method is provided, including: receiving a bitstream through a communication interface; and storing the bitstream in one or more storage media. The bitstream is obtained by an encoder through encoding according to the image encoding method according to the first aspect.

According to a fifteenth aspect, a bitstream distribution system is provided, including at least one storage medium and a video stream device. The at least one storage medium is configured to store a bitstream, and the bitstream is obtained by an encoder through encoding according to the image encoding method according to the first aspect. The video stream device is configured to send the bitstream in the at least one storage medium to a decoder in response to a request of the decoder.

According to a sixteenth aspect, a bitstream distribution method is provided, including: receiving a first request; selecting a bitstream from at least one storage medium in response to the first request; and sending the bitstream to a destination device. The at least one storage medium is configured to store a bitstream, and the bitstream is obtained by an encoder through encoding according to the foregoing image encoding method according to the first aspect.

According to a seventeenth aspect, a bitstream processing system is provided, including an image source device, an encoder, one or more storage media, and a destination device. The image source device is configured to provide image data. The encoder is configured to: obtain the image data of the image source device through an interface, and encode the image data to obtain one or more bitstreams, where the bitstream is obtained by the encoder through encoding according to the image encoding method according to the first aspect. The encoder is configured to store the one or more bitstreams in the one or more storage media. Alternatively, the encoder is configured to encapsulate the one or more bitstreams to obtain a transmission bitstream. The encoder is configured to transmit the transmission bitstream to the destination device through a communication link or a communication network. The destination device is configured to decapsulate the transmission bitstream to obtain the one or more bitstreams. The destination device is configured to decode the one or more bitstreams to obtain decoded data.

Technical effect obtained in the second aspect to the seventeenth aspect is similar to the technical effect obtained through a corresponding technical means in the first aspect. Details are not described herein again.

### BRIEF DESCRIPTION OF DRAWINGS

FIG. 1 is a diagram of an implementation environment according to an embodiment of this application;
FIG. 2 is a diagram of an AI encoder model according to an embodiment of this application;
FIG. 3 is a diagram of an AI decoder model according to an embodiment of this application;
FIG. 4 is a diagram of a JPEG-AI encoder model according to an embodiment of this application;
FIG. 5 is a diagram of a JPEG-AI decoder model according to an embodiment of this application;
FIG. 6 is a schematic flowchart of an image encoding method according to an embodiment of this application;
FIG. 7 is a diagram of a bitstream structure according to an embodiment of this application;
FIG. 8A to FIG. 8F are a diagram of a chroma sampling position according to an embodiment of this application;
FIG. 9 is a diagram of another bitstream structure according to an embodiment of this application;
FIG. 10 is a schematic flowchart of an image decoding method according to an embodiment of this application;
FIG. 11 is a diagram of a structure of an encoding device according to an embodiment of this application; and
FIG. 12 is a diagram of a structure of a decoding device according to an embodiment of this application.

### DESCRIPTION OF EMBODIMENTS

To make the objectives, technical solutions, and advantages of this application clearer, the following further describes the implementations of this application in detail with reference to accompanying drawings.

For ease of understanding, before an image encoding method and an image decoding method provided in embodiments of this application are described in detail, terms, implementation environments, and application scenarios in embodiments of this application are first described.

First, nouns in embodiments of this application are explained.

### 1. High dynamic range (high dynamic range, HDR)

A dynamic range (dynamic range) indicates a ratio of a maximum value to a minimum value of a variable in a plurality of fields. For a digital image, a dynamic range indicates a ratio of a maximum grayscale value to a minimum grayscale value in a range in which the image can be displayed. Currently, in most color digital images, each of R, G, and B channels uses one byte, that is, 8 bits, for storage. To be specific, when a representation range of each channel is grayscale levels from 0 to 255, a dynamic range of an image is 0 to 255. In the real world, when the dynamic range of a scene is within the range of 10⁻³ to 10⁶, the dynamic range is called the high dynamic range (high dynamic range, HDR). In contrast, a dynamic range of a common image is the low dynamic range (low dynamic range, LDR). An imaging process of a digital camera is actually mapping from the high dynamic range of the real world to the low dynamic range of a photo.

### 2. Standard dynamic range optical-electro transfer function

A standard dynamic range image corresponds to a high dynamic range image. An 8-bit image in a format like jpeg that is conventionally used may be considered as a standard dynamic range image. Before a camera that can shoot an HDR image appears, a conventional camera can only record photographed light information within a specific range by controlling an exposure value. Maximum illumination information of a display device cannot reach luma information of the real world. In addition, the display device is used to browse images. Therefore, the optical-electro transfer function is required. The optical-electro transfer function of a CRT display in an early display is the Gamma function. The BT.1886 standard released by the international telecommunication union-radiocommunication sector (international telecommunication union-radiocommunication sector, ITU-R) defines the optical-electro transfer function based on the Gamma function. An image obtained after tone mapping is performed according to the transfer function, and then quantized into an 8-bit image is a conventional SDR image. In other words, the SDR image and the foregoing optical-electro transfer function perform well on a conventional display device (illumination is about 100 cd/m²).

### 3. HDR optical-electro transfer function

However, with the upgrade of the display device, an illumination range of the display device increases continuously. The illumination information of the existing consumer-level HDR display is 600 cd/m², and the illumination information of the high-end HDR display can reach 2000 cd/m², which is far greater than the illumination information of the SDR display device. The optical-electro transfer function in the BT.1886 standard cannot well express display performance of the HDR display device. Therefore, an improved optical-electro transfer function is required to adapt to the upgrade of the display device, an idea of optical-electro transfer function is derived from the mapping function in the tone mapping (tone mapping, TM) algorithm. The mapping function is adjusted as the optical-electro transfer function (optical-electro transfer function, OETF).

Currently, there are the following three common optical-electro transfer functions: a perception quantization (perception quantization, PQ) optical-electro transfer function, a hybrid log-gamma (hybrid log-gamma, HLG) optical-electro transfer function, and a scene luminance fidelity (scene luminance fidelity, SLF) optical-electro transfer function. The three optical-electro transfer functions are transfer functions specified in an audio video coding standard (audio video coding standard, AVS for short) standard.

Different from the conventional gamma transfer function, the PQ optical-electro transfer function is a perception quantization transfer function proposed based on a luma perception model of human eyes. The PQ optical-electro transfer function indicates a conversion relationship between a linear signal value of an image pixel and a non-linear signal value in a PQ domain. The HLG optical-electro transfer function is obtained by improving a conventional gamma curve. The HLG optical-electro transfer function uses the conventional gamma curve in a low segment, and supplements a log curve in a high segment. The HLG optical-electro transfer function indicates a conversion relationship between a linear signal value of an image pixel and a nonlinear signal value in an HLG domain. When the SLF optical-electro transfer function is under the premise of satisfying the optical characteristics of human eyes, an SLF optical-electro transfer curve is a conversion relationship between a linear signal value of an image pixel and a non-linear signal value in an SLF domain.

### 4. Dynamic range mapping in displaying

A dynamic range mapping method is mainly applied to adaptation between front-end HDR signals and back-end HDR terminal display devices. For example, the front-end collects a 4000-nit light signal, but the back-end HDR terminal display device (for example, a TV set) has only 500 nits of HDR display capability. Therefore, how to map the 4000-nit signal to a 500-nit device is a tone-mapping process from high to low. For another example, the front end captures a 100-nit SDR signal, and a display end can display a 2000-nit television signal. Displaying the 100-nit signal on a 2000-nit device well is another low-to-high tone-mapping process.

The dynamic range mapping method may be classified into static mapping and dynamic mapping. In a static mapping method, a single piece of data is used to perform an overall tone mapping process based on same video content or same hard disk content, that is, there is usually a same processing curve. This method has advantages that less information is carried and a processing procedure is simple, but has a disadvantage that information may be lost in some scenes because the same curve is used for tone mapping in all scenes. For example, if the curve focuses on protecting bright areas, some details may be lost or even invisible in some extremely dark scenes. Consequently, experience can be affected. In a dynamic mapping method, dynamic adjustment is performed based on a specific area, each scene, or each frame of content. This method has an advantage that a processing result is better because different curve processing is performed based on a specific area, each scene, or each frame. In this way, a processing result is better, but each frame or each scenario needs to carry related scenario information, and a large amount of information is carried.

### 5. ITU-T T.35 terminal identifier allocation

ITU-T T.35 (T.35 for short in this application) is a T.35 specification released by the ITU-T, that is, a procedure for allocating non-standard extension codes defined by the ITU. ITU-T T.35 consists of three parts: a country code (Country code), a terminal provider code (Terminal provider code), and a terminal provider oriented code (terminal provider oriented code). The country code is defined in appendixes A and B of ITU-T T.35, and the terminal provider code is allocated by the ITU administration. Each terminal provider, for which a provider code has been assigned by the administration, manages the terminal provider oriented code by the terminal provider.

The T.35 may be used in various contexts such as an SEI message of a video codec. Data carried in the T.35 message may include HDR dynamic metadata, HDR static metadata, HDR display mapping information, and the like. However, information transmitted through T.35 is not limited to a video, but may be information of any nature.

### 6. Metadata (Metadata)

Key information about a recorded video, scene, or image in a frame, for example, an average value, a maximum value, and a minimum value in a scene. HDR static metadata, also referred to as fixed metadata, is used to control colors and details for each frame of image in an entire video based on the same metadata. On the contrary, HDR dynamic metadata is also referred to as variable metadata, and is used to control colors and details for each frame of image in a video based on different metadata.

Then, an implementation environment in embodiments of this application is described.

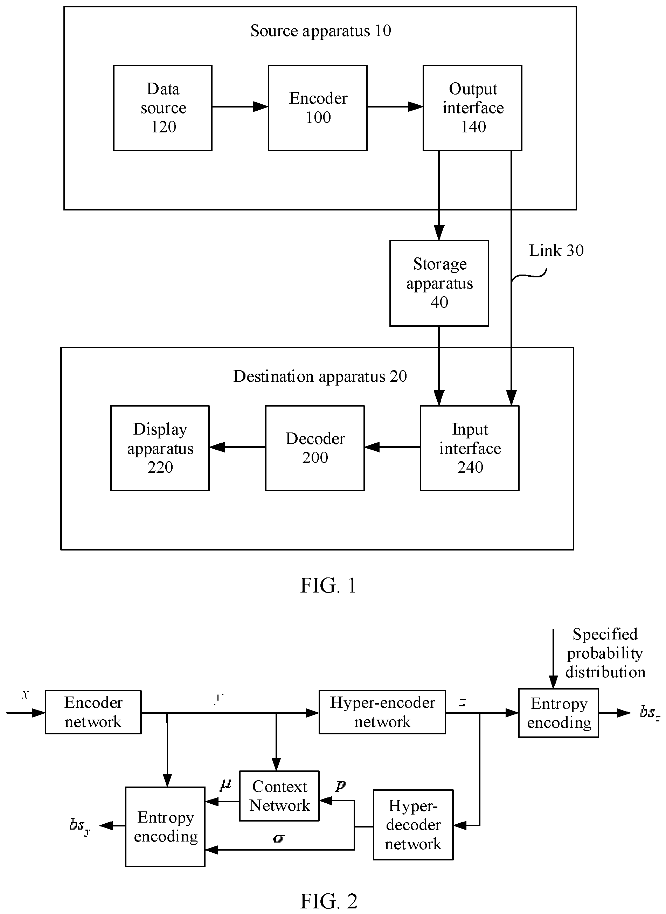

FIG. 1 is a diagram of an implementation environment according to an embodiment of this application. The implementation environment includes a source apparatus 10, a destination apparatus 20, a link 30, and a storage apparatus 40. The source apparatus 10 may generate an encoded image. Therefore, the source apparatus 10 may also be referred to as an image encoding apparatus or an encoder side. The destination apparatus 20 may decode the encoded image generated by the source apparatus 10. Therefore, the destination apparatus 20 may also be referred to as an image decoding apparatus or a decoder side. The link 30 may receive the encoded image generated by the source apparatus 10, and may transmit the encoded image to the destination apparatus 20. The storage apparatus 40 may receive the encoded image generated by the source apparatus 10, and may store the encoded image. In this case, the destination apparatus 20 may directly obtain the encoded image from the storage apparatus 40. Alternatively, the storage apparatus 40 may correspond to a file server or another intermediate storage apparatus that can store the encoded image generated by the source apparatus 10. In this case, the destination apparatus 20 may transmit, in a streaming manner, or download the encoded image stored on the storage apparatus 40.

The source apparatus 10 and the destination apparatus 20 each may include one or more processors and a memory coupled to the one or more processors. The memory may include a random access memory (random access memory, RAM), a read-only memory (read-only memory, ROM), an electrically erasable programmable read-only memory (electrically erasable programmable read-only memory, EEPROM), a flash memory, any other medium that can be used to store required program code in a form of instructions or data structures and that is accessible to a computer, or the like. For example, the source apparatus 10 and the destination apparatus 20 each may include a mobile phone, a smartphone, a personal digital assistant (personal digital assistant, PDA), a wearable device, a palmtop computer PPC (pocket PC), a tablet computer, a smart in-vehicle infotainment system, a smart television, a smart sound box, a desktop computer, a mobile computing apparatus, a notebook (for example, a laptop) computer, a tablet computer, a set-top box, a telephone handheld such as a so-called "smart" phone, a television, a camera, a display apparatus, a digital media player, a video game console, a vehicle-mounted computer, or the like.

The link 30 may include one or more media or apparatuses that can transmit the encoded image from the source apparatus 10 to the destination apparatus 20. In a possible implementation, the link 30 may include one or more communication media that can enable the source apparatus 10 to directly send the encoded image to the destination apparatus 20 in real time. In this embodiment of this application, the source apparatus 10 may modulate the encoded image based on a communication standard. The communication standard may be a wireless communication protocol, or the like; and may send a modulated image to the destination apparatus 20. The one or more communication media may include a wireless communication medium and/or a wired communication medium. For example, the one or more communication media may include a radio frequency (radio frequency, RF) spectrum or one or more physical transmission lines. The one or more communication media may be a part of a packet-based network. The packet-based network may be a local area network, a wide area network, a global network (for example, the Internet), or the like. The one or more communication media may include a router, a switch, a base station, another device that facilitates communication from the source apparatus 10 to the destination apparatus 20, or the like. This is not specifically limited in embodiments of this application.

In a possible implementation, the storage apparatus 40 may store the received encoded image sent by the source apparatus 10, and the destination apparatus 20 may directly obtain the encoded image from the storage apparatus 40. In this case, the storage apparatus 40 may include any one of a plurality of types of distributed or locally accessed data storage media. For example, the any one of the plurality of types of distributed or locally accessed data storage media may be a hard disk drive, a Blu-ray disc, a digital versatile disc (digital versatile disc, DVD), a compact disc read-only memory (compact disc read-only memory, CD-ROM), a flash memory, a volatile or non-volatile memory, or any other appropriate digital storage medium for storing the encoded image.

In a possible implementation, the storage apparatus 40 may correspond to the file server or the another intermediate storage apparatus that can store the encoded image generated by the source apparatus 10, and the destination apparatus 20 may transmit, in the streaming manner, or download the image stored on the storage apparatus 40. The file server may be any type of server that can store the encoded image and send the encoded image to the destination apparatus 20. In a possible implementation, the file server may include a network server, a file transfer protocol (file transfer protocol, FTP) server, a network attached storage (network attached storage, NAS) apparatus, a local disk drive, or the like. The destination apparatus 20 may obtain the encoded image through any standard data connection (including an Internet connection). The any standard data connection may include a wireless channel (for example, a Wi-Fi connection), a wired connection (for example, a digital subscriber line (digital subscriber line, DSL) or a cable modem), or a combination of a wireless channel and a wired connection suitable for obtaining the encoded image stored on the file server. Transmission of the encoded image from the storage apparatus 40 may be streaming transmission, download transmission, or a combination thereof.

The implementation environment shown in FIG. 1 is merely a possible implementation. In addition, technologies in embodiments of this application are not only applicable to the source apparatus 10 that can encode an image and the destination apparatus 20 that can decode the encoded image that are shown in FIG. 1, but also applicable to another apparatus that can encode an image and another apparatus that can decode the encoded image. This is not specifically limited in embodiments of this application.

In the implementation environment shown in FIG. 1, the source apparatus 10 includes a data source 120, an encoder 100, and an output interface 140. In some embodiments, the output interface 140 may include a modulator/demodulator (modem) and/or a transmitter. The transmitter may also be referred to as an emitter. The data source 120 may include an image capture apparatus (for example, a camera), an archive including a previously captured image, a feed-in interface for receiving an image from an image content provider, and/or a computer graphics system for generating an image, or a combination of these sources of images.

The data source 120 may send the image to the encoder 100, and the encoder 100 may encode the received image sent by the data source 120 to obtain the encoded image. The encoder may send the encoded image to the output interface. In some embodiments, the source apparatus 10 directly sends the encoded image to the destination apparatus 20 through the output interface 140. In another embodiment, the encoded image may alternatively be stored in the storage apparatus 40, so that the destination apparatus 20 subsequently obtains the encoded image for decoding and/or displaying.

In the implementation environment shown in FIG. 1, the destination apparatus 20 includes an input interface 240, a decoder 200, and a display apparatus 220. In some embodiments, the input interface 240 includes a receiver and/or a modem. The input interface 240 may receive the encoded image through the link 30 and/or from the storage apparatus 40, and then send the encoded image to the decoder 200. The decoder 200 may decode the received encoded image to obtain a decoded image. The decoder may send the decoded image to the display apparatus 220. The display apparatus 220 may be integrated with the destination apparatus 20 or disposed outside the destination apparatus 20. Usually, the display apparatus 220 displays the decoded image. The display apparatus 220 may be a display apparatus of any one of a plurality of types. For example, the display apparatus 220 may be a liquid crystal display (liquid crystal display, LCD), a plasma display, an organic light-emitting diode (organic light-emitting diode, OLED) display, or another type of display apparatus.

Although not shown in FIG. 1, in some aspects, the encoder 100 and the decoder 200 may be integrated with an encoder and a decoder respectively, and may include an appropriate multiplexer-demultiplexer (multiplexer-demultiplexer, MUX-DEMUX) unit or other hardware and software for encoding both an audio and a video in a common data stream or a separate data stream. In some embodiments, if applicable, the MUX-DEMUX unit may comply with the ITU H.223 multiplexer protocol or another protocol like the user datagram protocol (user datagram protocol, UDP).

The encoder 100 and the decoder 200 each may be any one of the following circuits: one or more microprocessors, a digital signal processor (digital signal processor, DSP), an application-specific integrated circuit (application-specific integrated circuit, ASIC), a field-programmable gate array (field-programmable gate array, FPGA), discrete logic, hardware, or any combination thereof. If technologies in embodiments of this application are partially implemented in software, an apparatus may store instructions for the software in an appropriate non-volatile computer-readable storage medium, and may execute the instructions in hardware through one or more processors, to implement technologies in embodiments of this application. Any one of the foregoing content (including hardware, software, a combination of hardware and software, and the like) may be considered as one or more processors. The encoder 100 and the decoder 200 each may be included in one or more encoders or decoders. Either the encoder or the decoder may be integrated as a part of a combined encoder/decoder (codec) in a corresponding apparatus.

In embodiments of this application, the encoder 100 may be generally referred to as "signaling" or "sending" some information to another apparatus, for example, the decoder 200. The term "signaling" or "sending" may generally be transmission of syntax elements and/or other data used to decode a compressed image. Such transmission may occur in real time or almost in real time. Alternatively, such communication may occur after a period of time, for example, may occur when a syntax element in an encoded bitstream is stored in a computer-readable storage medium during encoding. The decoding apparatus may then retrieve the syntax element at any time after the syntax element is stored in the medium.

It should be noted that the application scenario and the implementation environment described in embodiments of this application are intended to describe the technical solutions in embodiments of this application more clearly, but constitute no limitation on the technical solutions provided in embodiments of this application. A person of ordinary skill in the art may learn that, with evolution of the application scenario and the implementation environment, the technical solutions provided in embodiments of this application are also applicable to a similar technical problem.

Finally, an application scenario in embodiments of this application is described.

An encoding and decoding technology is a technology in which original signal data is indicated in a lossy or lossless manner by using a small quantity of bits based on data features such as spatial redundancy, visual redundancy, and statistical redundancy, and can implement effective transmission and storage of information such as images/videos/audio. This technology plays an important role in a media era in which types and a data amount of currently transmitted or stored information are increasing.

Image compression is used as an example. The image compression includes lossy compression and lossless compression. The lossy compression achieves a large compression ratio at a cost of reducing image quality to some extent, and the lossless compression does not cause a loss of image details. A conventional image/video compression algorithm has been developed for decades, and mature compression standards such as high efficiency video coding (high efficiency video coding, HEVC) and versatile video coding (Versatile Video Coding, VVC) are formed. The conventional image/video compression algorithm has advantages such as comprehensive supported functions, good universality, and good hardware support, and are widely used. However, there is a bottleneck in improving encoding efficiency.

As deep learning outperforms a conventional algorithm in a plurality of computer vision tasks such as image recognition and target detection, more researchers start to explore deep learning-based image/video compression methods. Unlike a conventional image algorithm in which image encoding, quantization, and entropy encoding, and the like are separately optimized through a manual design, all modules (an encoder network, an entropy estimation network, a decoder network, and the like) in an AI image compression algorithm are optimized as a whole. Therefore, an AI image compression solution has better compression effect. However, deep learning is a resource-intensive algorithm, and not only requires high computing costs, but also consumes a large amount of memory. Although compute resources are increasing, it is still very important to optimize training and inference of a deep learning network for a model implementation. In particular, more models are migrated from a server side to a device with limited resources such as an edge side, for example, a smartphone and an embedded device. How to deploy a complex model on the device with limited resources is a problem that needs to be resolved based on a current deep learning technology.

A deep learning-based image compression method usually relates to an AI compression model and a JPEG-AI compression model. For ease of understanding, encoding and decoding processes of the two compression models are briefly described herein.

### (1) AI compression model

FIG. 2 is a diagram of an AI encoder model. The AI encoder model is also referred to as an encoder, and is used on an encoder side. During encoding, a to-be-encoded image x is input to an encoder network to obtain a feature map y, the feature map y is input to a hyper-encoder network to obtain a hyper-prior feature z, and entropy encoding is performed on the hyper-prior feature z based on a specified probability distribution, to encode the hyper-prior feature z into a bitstream. In addition, the hyper-prior feature z is input to a hyper-decoder network to obtain a prior feature p and a variance σ. Based on the prior feature p and the feature map y, an average value µ is obtained through a context network, and then entropy encoding is performed on the feature map y based on the probability distribution N(µ, σ), to encode the feature map y into a bitstream.

A bit sequence obtained by performing entropy encoding on the hyper-prior feature z is a partial bit sequence included in the bitstream. The partial bit sequence may be referred to as a hyper-prior bitstream, and is denoted as bs_{z}. A bit sequence obtained by performing entropy encoding on the feature map y is a partial bit sequence included in the bitstream. The partial bit sequence may be referred to as an image bitstream, and is denoted as bs_{y}.

In some embodiments, the context network includes a context model and a probability distribution estimation model. In this case, the feature map y may be input to the context model to obtain a context feature φ. Based on the prior feature p and the context feature φ, the average value µ is estimated based on a probability distribution estimation model. Certainly, this is merely an example. In practice, an implementation may alternatively be performed in another manner. This is not limited in embodiments of this application. In addition, the foregoing provides descriptions by using entropy encoding as an example. In practice, encoding may alternatively be performed in another encoding manner. This is not limited in embodiments of this application either.

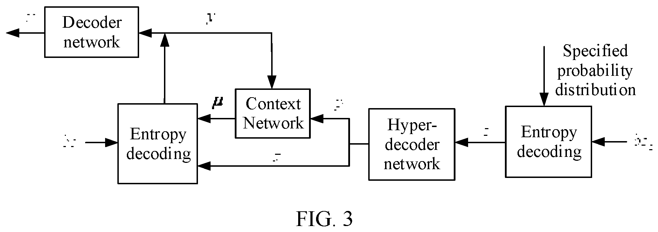

FIG. 3 is a diagram of an AI decoder model. The AI decoder model is also referred to as a decoder, and is used on a decoder side. During decoding, entropy decoding is performed, based on a specified probability distribution, on a hyper-prior bitstream bs_{z} included in a bitstream to obtain a hyper-prior feature ẑ , and the hyper-prior feature ẑ is input to a hyper-decoder network to obtain a prior feature *p̂* and a variance σ. Side information is determined from partial image features that have been decoded, an average value µ is obtained through the context network based on the prior feature *p̂* and the side information. Based on a probability distribution N(µ, σ), a feature map *ŷ* is obtained through entropy decoding from the image bitstream bs_{y} included in the bitstream. The feature map *ŷ* is input to a decoder network to obtain a reconstructed image *x̂*.

In some embodiments, the context network includes a context model and a probability distribution estimation model. In this case, based on a prior feature *p̂*, an average value µ corresponding to partial image features can be estimated based on the probability distribution estimation model, and the partial image features are obtained through entropy decoding from the image bitstream bs_{y} included in the bitstream based on a probability distribution N(µ, σ) of the partial image features. For other image features, side information is determined from decoded image features, the side information is input to a context model to obtain a context feature*ϕ̂,* and an average value µ corresponding to the other image features is estimated based on the probability distribution estimation model with reference to the prior feature *p̂* and the context feature*ϕ̂.* Certainly, this is merely an example. In practice, an implementation may alternatively be performed in another manner. This is not limited in embodiments of this application. In addition, the foregoing provides descriptions by using entropy decoding as an example. In practice, decoding may be performed in another decoding manner corresponding to an encoding manner. This is not limited in embodiments of this application either.

It should be noted that, if a probability distribution estimation network is modeled by using a Gaussian model (for example, a single Gaussian model or a hybrid Gaussian model), an estimated probability distribution includes an average value and a variance. If a probability distribution estimation network is modeled by using a Laplacian distribution model, an estimated probability distribution includes a position parameter and a scale parameter. If a probability distribution estimation network is modeled by using a logistic distribution model, an estimated probability distribution includes an average value and a scale parameter. The foregoing provides descriptions by using the Gaussian model as an example.

In addition, the hyper-decoder network includes a hyper-decoder prediction network and a hyper-scale decoder network. The hyper-decoder prediction network is configured to determine a prior feature, and the hyper-scale decoder network is configured to determine a variance. To be specific, a hyper-prior feature is input to the hyper-decoder prediction network to obtain the prior feature, and a hyper-prior feature is input to the hyper-scale decoder network to obtain the variance.

### (2) JPEG-AI compression model

The JPEG-AI compression model implements image encoding and decoding by encoding and decoding each separated component of a to-be-encoded image based on an auto-encoder structure in which color components are separated. In addition, a basic structure of the JPEG-AI compression model is the same as a structure of the foregoing AI compression model. However, an image input component of the JPEG-AI compression model is YUV components, and encoding and decoding operations are separately performed on a Y component and UV components. During encoding, the Y component is separately encoded by using an architecture shown in FIG. 2, and the UV components are encoded based on data of the Y component. During decoding, the Y component is separately decoded by using an architecture shown in FIG. 3, and the UV components are decoded based on data of the Y component.

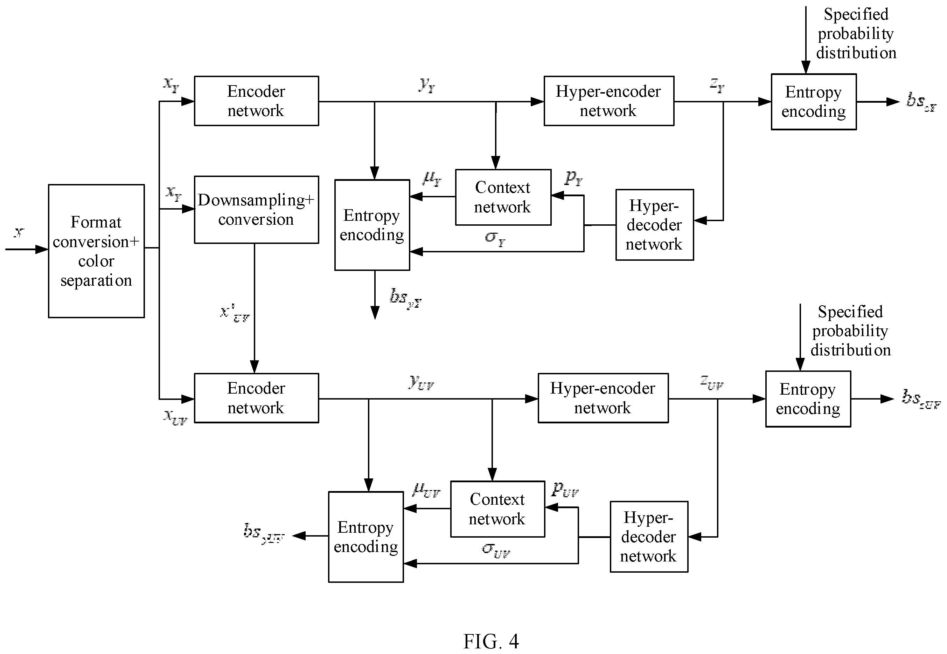

FIG. 4 is a diagram of a JPEG-AI encoder model. The JPEG-AI encoder model is also referred to as an encoder, and is used on an encoder side. During encoding, a to-be-encoded image x in an RGB (a color mode, where R indicates red, G indicates green, and B indicates blue) format is converted into an image in a YUV (a color encoding method, where Y indicates luma, that is, a grayscale value, and U and V indicate chroma) format through color space conversion to obtain an image x_{Y} of a Y component and an image x_{UV} of a UV component, the image x_{Y} of the Y component is input to the encoder network to obtain a feature map y_{Y} of the Y component, the feature map y_{Y} of the Y component is input to the hyper-encoder network to obtain a hyper-prior feature z_{Y} of the Y component, and entropy encoding is performed on the hyper-prior feature z_{Y} of the Y component based on a specified probability distribution, to encode the hyper-prior feature z_{Y} of the Y component into a bitstream. The hyper-prior feature z_{Y} of the Y component is input to the hyper-decoder network to obtain a prior feature p_{Y} and a variance σ_{Y} of the Y component, an average value µ_{Y} is obtained through a context network based on the prior feature p_{Y} and the variance σ_{Y}, and then entropy encoding is performed on the feature map y_{Y} of the Y component based on a probability distribution N(µ_{Y}, σ_{Y}) of the Y component, to encode the feature map y_{Y} of the Y component into a bitstream.

In addition, an image x_{Y} of the Y component is downsampled and then converted into an auxiliary image *x*'*_{UV}* of the UV component, the image x_{UV} of the UV component and the auxiliary image *x*'*_{UV}* of the UV component are input to the encoder network to obtain a feature map y_{UV} of the UV component, the feature map y_{UV} of the UV component is input to the hyper-encoder network to obtain a hyper-prior feature z_{UV} of the UV component, and entropy encoding is performed on the hyper-prior feature z_{UV} of the UV component based on the specified probability distribution, to encode the hyper-prior feature z_{UV} of the UV component into a bitstream. The hyper-prior feature z_{UV} of the UV component is input to the hyper-decoder network to obtain a prior feature p_{UV} and a variance σ_{UV} of the UV component, an average value µ_{UV} of the UV component is obtained based on the prior feature p_{UV} and the feature map y_{UV} of the UV component through the context network, and then based on a probability distribution N(µ_{UV}, σ_{UV}) of the UV component, entropy encoding is performed on the feature map y_{UV} of the UV component, to encode the feature map y_{UV} of the UV component into a bitstream.

A bit sequence obtained by performing entropy encoding on the hyper-prior feature z_{Y} of the Y component is a part of a bit sequence included in the bitstream, and the part of the bit sequence may be referred to as a hyper-prior bitstream bs_{zY} of the Y component. A bit sequence obtained by performing entropy encoding on the feature map y_{Y} of the Y component is a part of a bit sequence included in the bitstream, and the part of the bit sequence may be referred to as an image bitstream bs_{yY} of the Y component. A bit sequence obtained by performing entropy encoding on the hyper-prior feature z_{UV} of the UV component is a part of a bit sequence included in the bitstream, and the part of the bit sequence may be referred to as a hyper-prior bitstream bs_{zUV} of the UV component. A bit sequence obtained by performing entropy encoding on the feature map y_{UV} of the UV component is a part of a bit sequence included in the bitstream, and the part of the bit sequence may be referred to as an image bitstream bs_{yUV} of the UV component.

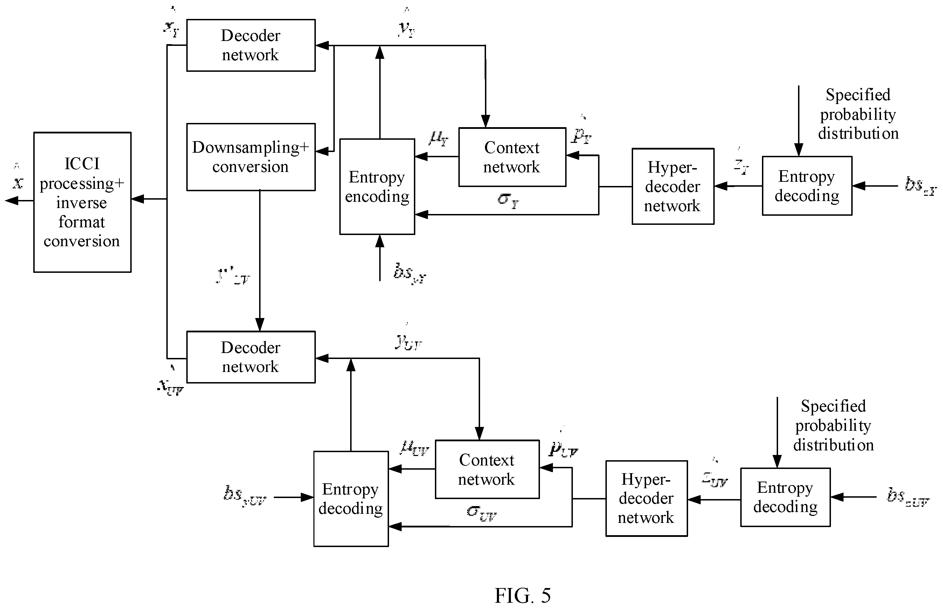

FIG. 5 is a diagram of a JPEG-AI decoder model. The JPEG-AI decoder model is also referred to as a decoder, and is used on a decoder side. During decoding, entropy decoding is performed, based on a specified probability distribution, on a hyper-prior bitstream bs_{zY} of a Y component included in a bitstream to obtain a hyper-prior feature $\hat{{z}_{Y}}$ of the Y component, and the hyper-prior feature $\hat{{z}_{Y}}$ of the Y component is input to a hyper-decoder network to obtain a prior feature $\hat{{p}_{Y}}$ and a variance σ_{Y} of the Y component. Side information is determined from partial image features that have been decoded, an average value µ_{Y} of the Y component is obtained through the context network based on the prior feature $\hat{{p}_{Y}}$ and the side information of the Y component. Based on a probability distribution N(µ_{Y}, σ_{Y}) of the Y component, a feature map $\hat{{y}_{Y}}$ of the Y component is obtained through entropy decoding from the image bitstream of the Y component included in the bitstream. The feature map $\hat{{y}_{Y}}$ of the Y component is input to a decoder network to obtain a reconstructed image $\hat{{x}_{Y}}$ of the Y component.

In addition, the feature map y_{Y} of the Y component is downsampled and then converted into an auxiliary feature y'*_{UV}* of a UV component. Then, entropy decoding is performed, based on the specified probability distribution, on the hyper-prior bitstream bs_{zUV} of the UV component included in the bitstream to obtain a hyper-prior feature $\hat{{z}_{UV}}$ of the UV component, and a hyper-prior feature $\hat{{z}_{UV}}$ of the UV component is input to a hyper-decoder network to obtain a prior feature $\hat{{p}_{UV}}$ and a variance σ_{UV} of the UV component. Side information is determined from partial image features that have been decoded, an average value µ_{UV} of the UV component is obtained through the context network based on the prior feature $\hat{{p}_{UV}}$ and the side information of the UV component. Based on a probability distribution N(µ_{UV}, σ_{UV}) of the UV component, a feature map $\hat{{y}_{UV}}$ of the UV component is obtained through entropy decoding from the image bitstream of the UV component included in the bitstream. The feature map $\hat{{y}_{UV}}$ of the UV component and the auxiliary feature *y'_{UV}* of the UV component are input to a decoder network to obtain a reconstructed image $\hat{{x}_{UV}}$ of the UV component.

Then, the reconstructed image $\hat{{x}_{Y}}$ of the Y component and the reconstructed image $\hat{{x}_{UV}}$ of the UV component are processed through an inter channel correction information (Inter Channel Correlation Information, ICCI) filtering network to obtain a reconstructed image in a YUV format. Finally, a format of the reconstructed image is converted from the YUV format into an RGB format through inverse color space conversion to obtain a reconstructed image *x̂*.

The foregoing describes general processes of the encoding and decoding of the JPEG-AI compression model. For partial detailed content, refer to the foregoing related explanations of the AI compression model. Details are not described herein.

In other words, before encoding an image, the JPEG-AI compression model needs to perform color space conversion on a to-be-encoded target image, and perform downsampling preprocessing on an image of a component. After a reconstructed image of a component of the target image is obtained through decoding and reconstruction, upsampling is performed on the reconstructed image of the component, and inverse color space conversion is performed on the reconstructed image. However, when the JPEG-AI decoder model performs inverse color space conversion, a coefficient of a used conversion matrix is applicable to an SDR image. Therefore, an accurate HDR image cannot be reconstructed. In addition, when upsampling is performed on a reconstructed image of a component, an offset status of a sampling position of chroma information relative to luma information is different from that of downsampling performed on a decoder side, and in this case, an accurate HDR image cannot be reconstructed. In addition, for a reconstructed image, a display device on a decoder side usually performs tone mapping according to an optical-electro transfer function corresponding to an SDR, and cannot accurately map and display a reconstructed HDR image.

Based on this, to implement encoding, decoding, transmission, and display of an HDR image, this application provides an image encoding method and an image decoding method, to add image information and HDR metadata information that can be used to accurately reconstruct an HDR image and display the HDR image during encoding, so that a decoder side can reconstruct an accurate image based on the image information. In addition, an HDR image can be effectively displayed based on the HDR metadata information.

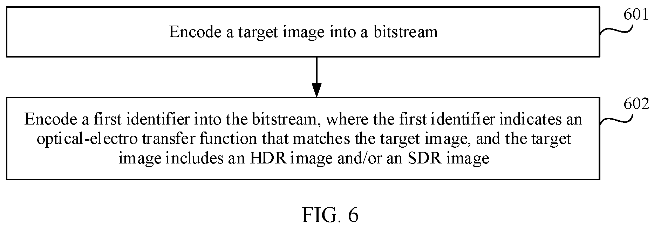

As shown in FIG. 6, this application provides an image encoding method. The method is applied to an encoder, and the method includes the following steps.

Step 601: Encode a target image into a bitstream.

For a specific implementation of encoding the target image into the bitstream, refer to related descriptions of the foregoing process of encoding and decoding the image by using the JPEG-AI compression model. Details are not described herein again.

Step 602: Encode a first identifier into the bitstream, where the first identifier indicates an optical-electro transfer function that matches the target image, and the target image includes an HDR image and/or an SDR image.

The optical-electro transfer function is used to convert a digital signal into an analog signal capable of driving physical output of the display, so as to correctly display an image on the display. When the target image is the HDR image, the first identifier indicates an optical-electro transfer function corresponding to the HDR image, for example, a PQ optical-electro transfer function or an HLG optical-electro transfer function. When the target image is the SDR image, the first identifier indicates an optical-electro transfer function corresponding to the SDR image, for example, an optical-electro transfer function based on the Gamma function.

In some embodiments, when the first identifier is encoded into the bitstream, the first identifier may be encoded into the bitstream in a form of an 8-bit unsigned integer, that is, the first identifier corresponds to a value ranging from 0 to 255. Certainly, the first identifier may also be encoded into the bitstream in another manner. This is not limited in embodiments of this application.

When the first identifier is encoded into the bitstream in the form of an 8-bit unsigned integer, Table 1 provides an example of a correspondence, to determine, based on the correspondence, the optical-electro transfer function indicated by the first identifier.

**Table 1**

| First identifier | Optical-electro transfer function | Reference standard file |
|---|---|---|
| 0 | Reserved | For future use by ITU-T \| ISO/IEC |
| 1 | V = α * L_{c}^{0.45} - ( α - 1 ), for >= | Rec. ITU-R BT.709-6 |
| | L_{c} >= β | Rec. ITU-R BT.1361-0 conventional colour gamut system (historical) |
| | V = 4.500 * L_{c} | |
| | for β > L_{c} >= 0 | (functionally the same as the values 6, 14 and 15) |
| 2 | Unspecified | Image characteristics are unknown or are determined by the application. |
| 3 | Reserved | For future use by ITU-T \| ISO/IEC |
| 4 | Assumed display gamma 2.2 | Rec. ITU-R BT.470-6 System M (historical) |
| | | United States National Television System Committee 1953 *Recommendation for transmission standards for color television* |
| | | United States Federal Communications Commission (2003) *Title 47 Code of Federal Regulations* 73.682 (a) (20) |
| | | Rec. ITU-R BT.1700-0 625 PAL and 625 SECAM |
| 5 | Assumed display gamma 2.8 | Rec. ITU-R BT.470-6 System B, G (historical) |
| 6 | V = α * L_{c}^{0.45} - ( α - 1 ) | Rec. ITU-R BT.601-7 525 or 625 |
| | for 1 >= L_{c} >= β | Rec. ITU-R BT.1358-1 525 or 625 (historical) |
| | V = 4.500 * L_{c} | Rec. ITU-R BT.1700-0 NTSC |
| | for β > L_{c} >= 0 | SMPTE ST 170 (2004) (functionally the same as the values 1, 14 and 15) |
| 7 | V = α * L_{c}^{0.45}- (α-1) | SMPTE ST 240 (1999) |
| | for 1 >= L_{c} >= β | |
| | V = 4.0 * L_{c} | |
| | for β > L_{c} >= 0 | |
| 8 | V = L_{c}, for 1 > L_{c} >= 0 | Linear transfer characteristics |
| 9 | V = 1.0 + Log10( L_{c} ) ÷ 2 | Logarithmic transfer characteristic (100:1 range) |
| | for 1 >= L_{c} >= 0.01 | |
| | V = 0.0 | |
| | for 0.01 > L_{c} >= 0 | |
| 10 | V = 1.0 + Log10(L_{c})÷2.5, | Logarithmic transfer characteristic (100 * Sqrt( 10) : 1 range) |
| | for 1 >= L_{c} >= Sqrt( 10) ÷ 1000; | |
| | V = 0.0, | |
| | for Sqrt( 10) ÷ 1000 > L_{c} >= 0 | |
| 11 | V = α * L_{c}^{0.45} - ( α - 1 ) | IEC 61966-2-4 |
| | for L_{c} >= β | |
| | V = 4.500 * L_{c} | |
| | for β > L_{c} > -β | |
| | V = -α * ( -L_{c} )^{0.45} + ( α - 1 ) | |
| | for -β >= L_{c} | |
| 12 | V= α * L_{c}^{0.45} - ( α - 1 ) | Rec. ITU-R BT.1361-0 extended colour gamut system (historical) |
| | for 1.33 > L_{c} >= β | |
| | V = 4.500 * L_{c} | |
| | for β > L_{c} >= *-*γ | |
| | V = -( α * ( -4 * L_{c} )^{0.45} - ( α - 1 ) ) ÷ 4 | |
| | for -γ >= L_{c} >= -0.25 | |
| 13 | - If MatrixCoefficients is equal to 0 | IEC 61966-2-1 sRGB (with MatrixCoefficients equal to 0) |
| | V= α * L_{c}(1÷2.4) - ( α - 1 ) | |
| | for 1 > L_{c} >= β | IEC 61966-2-1 sYCC (with MatrixCoefficients equal to 5) |
| | V = 12.92 * L_{c} | |
| | for β > L_{c} >= 0 | |
| | - Otherwise | |
| | V= α * L_{c}( 1÷2.4 ) - ( α - 1 ) | |
| | for L_{c} >= β | |
| | V= 12.92 * L_{c} | |
| | for β > L_{c} > -β | |
| | V = -α * (-L_{c})(1÷2.4) + ( α - 1 ) | |
| | for -β >= L_{c} | |
| 14 | V = α * L_{c}^{0.45} - ( α - 1 ) | Rec. ITU-R BT.2020-2 (10-bit system) (functionally the same as the values 1, 6 and 15) |
| | for 1 >= L_{c} >= β | |
| | V = 4.500 * L_{c} | |
| | for β > L_{c} >= 0 | |
| 15 | V = α * L_{c}^{0.45} - ( α - 1 ) | Rec. ITU-R BT.2020-2 (12-bit system) (functionally the same as the values 1, 6 and 14) |
| | for 1 >= L_{c} >= β | |
| | V = 4.500 * L_{c} | |
| | for β > L_{c} >= 0 | |
| 16 | V = (( c₁ + c₂ * Lₒⁿ ) ÷ ( 1 + c₃ * Lₒⁿ ) )^{m} | SMPTE ST 2084 (2014) for 10-, 12-, 14- and 16-bit systems |
| | c₁ = c₃ - c₂ + 1 = 107 ÷ 128 = 0.8359375 | |
| | c₂ = 2413 ÷ 128 = 18.8515625 | Rec. ITU-R BT.2100-2 perceptual quantization (PQ) system |
| | c₃ = 2392 ÷ 128 = 18.6875 | |
| | m = 2523 ÷ 32 = 78.84375 | |
| | n = 653 ÷ 4096 = 0.1593017578125 | |
| | for all values of Lₒ | |
| 17 | V = ( 48 * Lₒ ÷ 52.37 )( 1 ÷ 2.6) | SMPTE ST 428-1 (2019) |
| | for all values of Lₒ | |
| | for which Lₒ equal to 1 for peak white is ordinarily intended to correspond to a reference output luminance level of 48 candelas per square metre | |
| 18 | V = a * Ln( 12 * L_{c} - b ) + c | ARIB STD-B67 (2015) |
| | for 1 >= L_{c} > 1 ÷ 12 | Rec. ITU-R BT.2100-2 hybrid log-gamma (HLG) system |
| | V = Sqrt( 3 ) * L_{c}^{0.5} | |
| | for 1 ÷ 12 >= L_{c} >= 0 | |
| | a = 0.17883277 | |
| | b = 0.28466892 | |
| | c = 0.55991073 | |
| 19-255 | Reserved | For future use by ITU-T \| ISO/IEC |

It can be learned from Table 1 that, when the target image is the SDR image, the first identifier of the target image may be 13, and an optical-electro transfer function corresponding to the first identifier is an optical-electro transfer function defined in the IEC 61966-2-1 standard. The optical-electro transfer function supports optical-to-electro conversion on the SDR image. When the target image is the HDR image, the first identifier encoded into the bitstream is 16 or 18, where 16 indicates a PQ optical-electro transfer function, and 18 indicates an SLG optical-electro transfer function. For a specific function expression of the first identifier, refer to a middle column in Table 1. Lₒ is a linear signal value before conversion, and a value of Lₒ is normalized to [0, 1]. L_{c} is a linear signal value before conversion, and a value range of L_{c} is [0, 12]. V is a nonlinear signal value after conversion, and the value range of V is [0, 1]. In addition, a corresponding optical-electro transfer function is also recorded and described in a related standard, and may also be referred to in a standard file provided in a right column of Table 1.

It should be noted that Table 1 is merely an example. In specific application, an optical-electro transfer function corresponding to an identifier value in the table may be adjusted based on a related standard of image/video encoding and decoding. This is not limited in embodiments of this application.

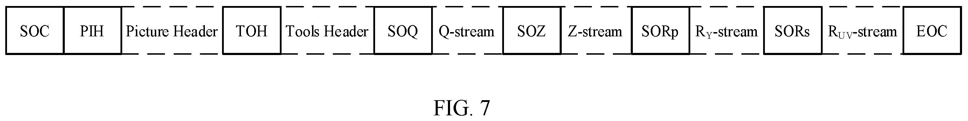

FIG. 7 is a diagram of a bitstream structure defined by JPEG-AI. The bitstream structure includes a start of codestream marker (start of codestream marker, SOC), a picture header marker (picture header marker, PIH) and a corresponding picture header (picture header), a tools header marker (tools header marker, TOH) and a corresponding (encoding and decoding) tools header, a start of Quality map marker (start of Quality map marker, SOQ) and a corresponding bitstream (Q-stream), a plurality of picture bitstreams, and an end of codestream marker (end of codestream marker, EOC).

The plurality of image bitstreams include a codestream of a hyper-prior feature (Z-stream), a codestream of a primary component residual (RY-stream), and a codestream of a secondary component residual (RUV-stream). Each image bitstream corresponds to a start marker. The codestream of the hyper-prior feature follows a start of z-stream marker (start of z-stream marker, SOZ), the codestream of the primary component residual follows a start of residual stream for primary component marker (Start of Residual stream for primary component marker, SORP), and the codestream of the secondary component residual follows a start of residual stream for secondary component marker (Start of Residual stream for secondary component marker, SORS).

Based on this bitstream structure, an implementation process of step 602 may be: encoding the first identifier into the picture header (picture header).

It can be learned that, regardless of whether the encoded target image is the SDR image or the HDR image, the optical-electro transfer function that matches the target image may be determined, and the first identifier indicating the optical-electro transfer function is also encoded into the bitstream during encoding, so that a decoder side can display, based on the first identifier and according to the matched optical-electro transfer function, a reconstructed image corresponding to the target image.

In some embodiments, before the encoder encodes the target image, if a format of the target image is an RGB format, color space conversion needs to be performed on the target image, to convert an image in the RGB format into an image in a YUV format. However, JPEG-AI supports only two color space conversion modes: a preset BT.709 conversion matrix and a user-defined conversion matrix. BT.709 is a default color space of the SDR image. However, in other RGB-YUV conversion standards of ITU-R, such as ITU-R BT.2020 and ITU-R BT.2100, an HDR television standard is specified, and a color space specified in the BT.2020 standard is inherited and used. Therefore, when encoding and decoding an HDR image, the encoder and a decoder also need to support BT.2020 color space (consistent with the BT.2100 color space) conversion.

Based on this, when encoding the target image, the encoder side may further encode, into the bitstream, information related to a color space conversion matrix used by the encoder side to perform color space conversion on the target image, to indicate the decoder side to convert a reconstructed image in the YUV format into a reconstructed image in the RGB format based on the information related to the color space conversion matrix.

In a possible implementation, the image encoding method provided in this embodiment of this application further includes: encoding a second identifier into the bitstream, where the second identifier indicates chroma coordinates of each primary color of the target image; encoding a third identifier into the bitstream, where the third identifier indicates a pixel mapping range of the target image; and encoding a fourth identifier into the bitstream, where the fourth identifier indicates a coefficient of a conversion matrix used for performing color space conversion on the target image.

In this case, before encoding the target image into the bitstream, the encoder performs color space conversion on the target image based on the second identifier, the third identifier, and the fourth identifier.

In other words, the encoder performs color space conversion on the target image by using a corresponding color space conversion matrix based on a type of the target image (that is, the HDR image or the SDR image), and then encodes the converted target image into a bitstream. In addition, the encoder encodes, into the bitstream, an identifier of information related to the color space conversion matrix, that is, the second identifier, the third identifier, and the fourth identifier.

Similarly, when the bitstream includes a picture header, the second identifier, the third identifier, and the fourth identifier may also be encoded into the picture header.

In some embodiments, the second identifier indicating the chroma coordinates of each primary color of the target image may also be encoded into the bitstream in a form of an 8-bit unsigned integer, and corresponds to values 0 to 255. For example, chroma of the CIE 1931 specified in ISO/CIE 11664-1 includes x and y coordinates. Table 2 shows a manner of determining a corresponding chroma coordinate based on the second identifier. That is, Table 2 shows an example correspondence, to find, based on the second identifier, chroma coordinates corresponding to red, green, blue, and standard white light.

**Table 2**

| Second identifier | Primary color coordinates of chroma | | | Reference standard file |
|---|---|---|---|---|
| 0 | Reserved | | | For future use by ITU-T \| ISO/IEC |
| 1 | primary | x | y | Rec. ITU-R BT.709-6 |
| | green | 0.300 | 0.600 | Rec. ITU-R BT.1361-0 conventional colour gamut system and extended colour gamut system (historical) |
| | blue | 0.150 | 0.060 | |
| | red | 0.640 | 0.330 | |
| | white D65 | 0.3127 | 0.3290 | IEC 61966-2-1 sRGB or sYCC |
| | | | | IEC 61966-2-4 |
| | | | | SMPTE RP 177 (1993) Annex B |
| 2 | Unspecified | | | Image characteristics are unknown or are determined by the application. |
| 3 | Reserved | | | For future use by ITU-T \| ISO/IEC |
| 4 | primary | x | y | Rec. ITU-R BT.470-6 System M (historical) |
| | green | 0.21 | 0.71 | United States National Television System |
| | blue | 0.14 | 0.08 | Committee 1953 *Recommendation for transmission standards for color television* |
| | red | 0.67 | 0.33 | |
| | white C | 0.310 | 0.316 | United States Federal Communications |
| | | | | Commission (2003) *Title 47 Code of Federal Regulations* 73.682 (a) (20) |
| 5 | primary | x | y | Rec. ITU-R BT.470-6 System B, G |
| | green | 0.29 | 0.60 | (historical) |
| | blue | 0.15 | 0.06 | Rec. ITU-R BT.601-7 625 |
| | red | 0.64 | 0.33 | Rec. ITU-R BT.1358-0 625 (historical) |
| | white D65 | 0.3127 | 0.3290 | Rec. ITU-R BT.1700-0 625 PAL and 625 SECAM |
| 6 | primary | x | y | Rec. ITU-R BT.601-7 525 |
| | green | 0.310 | 0.595 | Rec. ITU-R BT.1358-1 525 or 625 (historical) |
| | blue | 0.155 | 0.070 | |
| | red | 0.630 | 0.340 | Rec. ITU-R BT.1700-0 NTSC |
| | white D65 | 0.3127 | 0.3290 | SMPTE ST 170 (2004) (functionally the same as the value 7) |
| 7 | primary | x | y | SMPTE ST 240 (1999) (functionally the same as the value 6) |
| | green | 0.310 | 0.595 | |
| | blue | 0.155 | 0.070 | |
| | red | 0.630 | 0.340 | |
| | white D65 | 0.3127 | 0.3290 | |
| 8 | primary | x | y | Generic film (colour filters using Illuminant C) |
| | green | 0.243 | 0.692 (Wratten 58) | |
| | blue | 0.145 | 0.049 (Wratten 47) | |
| | red | 0.681 | 0.319 (Wratten 25) | |
| | white C | 0.310 | 0.316 | |
| 9 | primary | x | y | Rec. ITU-R BT.2020-2 |
| | green | 0.170 | 0.797 | Rec. ITU-R BT.2100-2 |
| | blue | 0.131 | 0.046 | |
| | red | 0.708 | 0.292 | |
| | white D65 | 0.3127 | 0.3290 | |
| 10 | primary | x | y | SMPTE ST 428-1 (2019) (CIE 1931 XYZ as in ISO/CIE 11664-1) |
| | green (Y) | 0.0 | 1.0 | |
| | blue (Z) | 0.0 | 0.0 | |
| | red (X) | 1.0 | 0.0 | |
| | centre white | 1 ÷ 3 | 1 ÷ 3 | |
| 11 | primary | x | y | SMPTE RP 431-2 (2011) |
| | green | 0.265 | 0.690 | |
| | blue | 0.150 | 0.060 | |
| | red | 0.680 | 0.320 | |
| | white | 0.314 | 0.351 | |
| 12 | primary | x | y | SMPTE EG 432-1 (2010) |
| | green | 0.265 | 0.690 | |
| | blue | 0.150 | 0.060 | |
| | red | 0.680 | 0.320 | |
| | white D65 | 0.3127 | 0.3290 | |
| 13-21 | Reserved | | | For future use by ITU-T \| ISO/IEC |
| 22 | primary | x | y | No corresponding industry specification identified |
| | green | 0.295 | 0.605 | |
| | blue | 0.155 | 0.077 | |
| | red | 0.630 | 0.340 | |
| | white D65 | 0.3127 | 0.3290 | |
| 23-255 | Reserved | | | For future use by ITU-T \| ISO/IEC |

It can be learned from Table 2 that, when the target image is the HDR image, the second identifier encoded into the bitstream is 9, a green coordinate corresponding to the chroma x is 0.170, and a green coordinate corresponding to the chroma y is 0.797; a blue coordinate corresponding to the chroma x is 0.131, and a blue coordinate corresponding to the chroma y is 0.046; a red coordinate corresponding to the chroma x is 0.708, and a red coordinate corresponding to the chroma y is 0.292; and a standard white light coordinate corresponding to the chroma x is 0.3127, and a standard white light coordinate corresponding to the chroma y is 0.3290. The foregoing related information of the HDR image and the chroma primary color is involved in both the ITU-R BT.2020-2 standard and the ITU-R BT.2100-2 standard, and may also be viewed in the ITU-R BT.2020-2 standard and the ITU-R BT.2100-2 standard file.

In some embodiments, the third identifier indicating the pixel mapping range of the target image may be 0 or 1. When the input signal is an RGB image, the third identifier is 1, to indicate to perform full-range mapping on all pixels in the image. When the input signal is a luma and chroma image (for example, a YUV format image), if a black level and a range of the luma and chroma signal are not specified, the third identifier may be 0, to indicate to perform mapping on all pixels in the image in a limited range.

Optionally, for the image in the YUV format, the identifier value of the third identifier may also be marked as 1, to perform full-range mapping on all pixels in the image. This is not limited in embodiments of this application.

In some embodiments, when the fourth identifier indicating the coefficient of the conversion matrix used for performing color space conversion on the target image is encoded into the bitstream, the fourth identifier may also be encoded into the bitstream in a form of 8-bit unsigned integer, and corresponds to a value ranging from 0 to 255. For example, chroma of the CIE 1931 specified in ISO/CIE 11664-1 includes x and y coordinates. The following Table 3 provides an example of a correspondence, to determine, based on the correspondence, the fourth identifier and the coefficient of the conversion matrix.

**Table 3**

| Fourth identifier | Coefficient of the conversion matrix | Reference standard file |
|---|---|---|
| 0 | Identity | The identity matrix. |
| | | Typically used for GBR (often referred to as RGB); |
| | | however, may also be used for YZX (often referred to as XYZ); |
| | | IEC 61966-2-1 sRGB |
| | | SMPTE ST 428-1 (2019) |
| | | See equations 48 to 50 |
| 1 | K_{R} = 0.2126; K_{B} = 0.0722 | Rec. ITU-R BT.709-6 |
| | | Rec. ITU-R BT.1361-0 conventional colour gamut system and extended colour gamut system (historical) |
| | | IEC 61966-2-4 xvYCC₇₀₉ |
| | | SMPTE RP 177 (1993) Annex B |
| | | See equations 45 to 47 |
| 2 | Unspecified | Image characteristics are unknown or are determined by the application |
| 3 | Reserved | For future use by ITU-T \| ISO/IEC |
| 4 | K_{R} = 0.30; K_{B} = 0.11 | United States Federal Communications Commission (2003) |
| | | *Title 47 Code of Federal Regulations* 73.682 (a) (20) |
| | | See equations 45 to 47 |
| 5 | K_{R} = 0.299; K_{B} = 0.114 | Rec. ITU-R BT.470-6 System B, G (historical) |
| | | Rec. ITU-R BT.601-7 625 |
| | | Rec. ITU-R BT.1358-0 625 (historical) |
| | | Rec. ITU-R BT.1700-0 625 PAL and 625 SECAM |
| | | IEC 61966-2-1 sYCC |
| | | IEC 61966-2-4 xvYCC₆₀₁ (functionally the same as the value 6) |
| | | See equations 45 to 47 |
| 6 | K_{R} = 0.299; K_{B} = 0.114 | Rec. ITU-R BT.601-7 525 |
| | | Rec. ITU-R BT.1358-1 525 or 625 (historical) |
| | | Rec. ITU-R BT.1700-0 NTSC |
| | | SMPTE ST 170 (2004) (functionally the same as the value 5) |
| | | See equations 45 to 47 |
| 7 | K_{R} = 0.212; K_{B} = 0.087 | SMPTE ST 240 (1999) |
| | | See equations 45 to 47 |
| 8 | YCgCo or YCgCo-R | See equations 51 to 57 for YCgCo (when BitDepth_{C} is equal to BitDepth_{Y}) |
| | | See equations 58 to 65 for YCgCo-R (when BitDepth_{C} is equal to BitDepth_{Y} + 1) |
| 9 | K_{R} = 0.2627; K_{B} = 0.0593 | Rec. ITU-R BT.2020-2 (non-constant luminance) |
| | | Rec. ITU-R BT.2100-2 Y'CbCr |
| | | See equations 45 to 47 |
| 10 | K_{R} = 0.2627; K_{B} = 0.0593 | Rec. ITU-R BT.2020-2 (constant luminance) |
| | | See equations 66 to 75 |
| 11 | Y'D'_{Z}D'_{X} | SMPTE ST 2085 (2015) |
| | | See equations 76 to 78 |
| 12 | See equations 39 to 44 | Chromaticity-derived non-constant luminance system |
| | | See equations 45 to 47 |
| 13 | See equations 39 to 44 | Chromaticity-derived constant luminance system |
| | | See equations 66 to 75 |
| 14 | IC_{T}C_{P} | Rec. ITU-R BT.2100-2 IC_{T}C_{P} |
| | | See equations 79 to 81 for TransferCharacteristics value 16 (PQ) |
| | | See equations 82 to 84 for TransferCharacteristics value 18 (HLG) |
| 15 | IPT-C2 | SMPTE ST 2128 (202x) |
| | | See equations 85 to 87 |
| 16 | YCgCo-Re | See equations 58 to 65 |
| 17 | YCgCo-Ro | See equations 58 to 65 |
| 18-255 | Reserved | For future use by ITU-T \| ISO/IEC |

It can be learned from Table 3 that, when the target image is the HDR image, the fourth identifier encoded into the bitstream is 9, a corresponding matrix coefficient K_{R} is 0.2627, and K_{B} is 0.0593. In addition, the matrix coefficient is involved in both the ITU-R BT.2020-2 standard and the ITU-R BT.2100-2 standard, and may also be viewed in the ITU-R BT.2020-2 standard and the ITU-R BT.2100-2 standard file.

In this embodiment of this application, considering that the chroma coordinates of each primary color of the target image, the pixel mapping range of the target image, and the coefficient of the conversion matrix used for performing color space conversion on the target image jointly determine the conversion matrix used for performing color space conversion on the target image, when the encoder performs color space conversion on the target image, related information indicating the conversion matrix, that is, the second identifier, the third identifier, and the fourth identifier, may also be encoded into the bitstream, so that the decoder can perform color space conversion processing on a reconstructed HDR image in the YUV format based on the second identifier, the third identifier, and the fourth identifier.

In some embodiments, after converting a target image in the RGB format into a target image in the YUV format through color space conversion, the encoder may separately perform downsampling processing on an image of a Y component and an image of a UV component to reduce a data processing amount. However, in different sampling modes, sampling positions in the image of the Y component and the image of the UV component are offset. After obtaining the reconstructed image of the Y component and the reconstructed image of the UV component through decoding, the decoder side performs upsampling on the reconstructed image. If an offset status of sampling positions is different from that of the encoder side, accuracy of the reconstructed image is also affected.

Based on this, the encoder may further encode a fifth identifier into the bitstream, where the fifth identifier indicates an offset status of sampling positions of a primary component of the target image and a secondary component of the target image. In other words, after color space conversion is performed on the target image, the target image includes an image of the primary component and an image of the secondary component. Before encoding the target image into the bitstream, the encoder may perform downsampling on the image of the primary component and the image of the secondary component based on the fifth identifier, and then encode a downsampled image of the primary component and a downsampled image of the secondary component into the bitstream.

For the image in the YUV format, the primary component may be the Y component, and the secondary component may be the UV component.

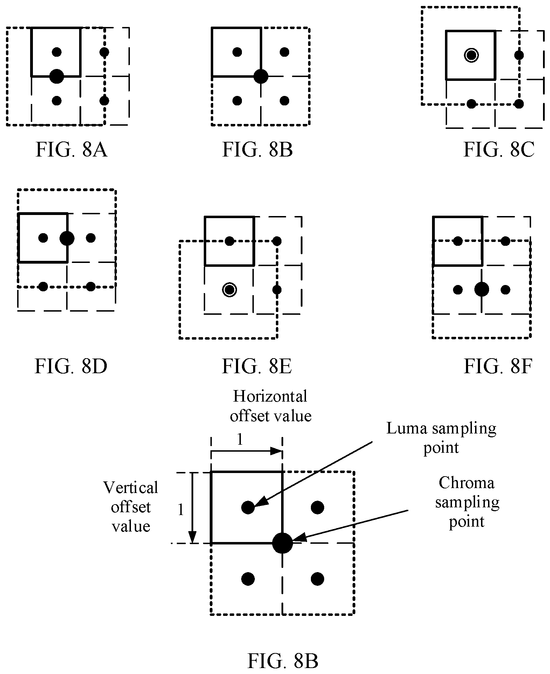

A 420 sampling mode is used as an example. Refer to a diagram of a chroma sampling position shown in FIG. 8A to FIG. 8F. A luma (Y) sample area in an upper left corner of an image is indicated by using a black solid box, and a chroma (UV) sample area in an upper left corner of the image is indicated by using a black solid box. A central point of the luma sample area is a luma sampling point, and a central point of the chroma sample area is a chroma sampling point. FIG. 8A to FIG. 8F show six offset statuses (a) to (f) in total.

For the six types of offset statuses listed in FIG. 8A to FIG. 8F, Table 4 shows an offset status between a chroma sampling position and a luma sampling position in the 420 sampling mode. That is, Table 4 lists a correspondence between the fifth identifier and the offset status of the chroma sampling position, and corresponds to the diagram in FIG. 8A to FIG. 8F, and lists a horizontal offset value and a vertical offset value of the chroma sampling position relative to the luma sampling position in each offset status.

**Table 4**

| Identifier value | Horizontal offset value | Vertical offset value |
|---|---|---|
| 0 | 0 | 0.5 |
| 1 | 0.5 | 0.5 |
| 2 | 0 | 0 |
| 3 | 0.5 | 0 |
| 4 | 0 | 1 |
| 5 | 0.5 | 1 |

It should be understood that, when an identifier value of the fifth identifier is 0, corresponding to FIG. 8A, a sampling position of a chroma sampling point has a horizontal offset value of 0 and a vertical offset value of 0.5 compared with a luma sampling point; when an identifier value of the fifth identifier is 1, corresponding to FIG. 8B, a sampling position of a chroma sampling point has a horizontal offset value of 0.5 and a vertical offset value of 0.5 compared with a luma sampling point; when an identifier value of the fifth identifier is 2, corresponding to FIG. 8C, a sampling position of the chroma sampling point has a horizontal offset value of 0 and a vertical offset value of 0 compared with the luma sampling point; when an identifier value of the fifth identifier is 3, corresponding to FIG. 8D, a sampling position of the chroma sampling point has a horizontal offset value of 0.5 and a vertical offset value of 0 compared with the luma sampling point; when an identifier value of the fifth identifier is 4, corresponding to FIG. 8E, a sampling position of a chroma sampling point has a horizontal offset value of 0 and a vertical offset value of 1 compared with a luma sampling point; and when an identifier value of the fifth identifier is 5, corresponding to FIG. 8F, a sampling position of a chroma sampling point has a horizontal offset value of 0.5 and a vertical offset value of 1 compared with a luma sampling point.

It can be learned from FIG. 8A to FIG. 8F and Table 4 that, when the fifth identifier is 1, the chroma sampling point is located in the middle row and the middle column of luma sampling points. In this case, if pixel coordinates of the luma sampling point Y are (x, y), pixel coordinates of corresponding chroma sampling points U and V are (x/2, y/2). When the fifth identifier is 2, the chroma sampling point is located at the upper left corner of the luma sampling point. In this case, if pixel coordinates of the luma sampling point Y are (x, y), pixel coordinates of the corresponding chroma sampling points of U and V samples are (floor(x/2), floor(y/2)).

It should be noted that in this 420 sampling mode, sampling density of luma samples is lower than that of chroma to reduce the need for data transmission and storage. In addition, in the 420 sampling mode, in a horizontal direction, the sampling density of the luma is full resolution, but the sampling density of the chroma is only half of the luma; and in the vertical direction, both the luma and the chroma are sampled by half of the full resolution.

It should be understood that the foregoing example is described by using only the 420 sampling mode as an example. For another sampling mode like the 422 sampling mode, an identifier indicating the offset status of the sampling positions of the primary component and the secondary component in the sampling mode may also be encoded into the bitstream in a same manner. This is not limited in embodiments of this application.

Similarly, when the bitstream includes a picture header, the fifth identifier may also be encoded into the picture header.

In this embodiment of this application, after color space conversion is performed on the target image, if downsampling is performed on the image of the primary component and the image of the secondary component, the fifth identifier indicating the offset status of the sampling positions of the primary component of the target image and the secondary component of the target image may also be encoded into the bitstream, so that the decoder can correspondingly perform upsampling processing on the reconstructed image of the Y component and the reconstructed image of the UV component based on the fifth identifier.

In some embodiments, to accurately render and display the target image, the image encoding method provided in this embodiment of this application further includes: encoding static metadata of the target image into the bitstream, where the static metadata includes source device information and image display information. The source device information indicates color information of a mastering monitor that generates the target image, and the image display information indicates display luma of the target image.

In an example, the source device information includes at least one of chroma coordinates of three primary colors, chroma coordinates of standard white light, maximum display luma, and minimum display luma of the mastering monitor. The chroma coordinates of the three primary colors include x coordinates of the three primary colors and y coordinates of the three primary colors, and the chroma coordinates of the standard white light include an x coordinate of the standard white light and a y coordinate of the standard white light.

Optionally, each item in the source device information may be indicated in a form of a 16-bit unsigned integer. This is not limited in embodiments of this application.

In an example, the image display information includes at least one of maximum display luma or maximum average display luma of the target image.

The maximum display luma is a maximum luma value that can be reached by a single pixel in the target image. The maximum display luma may be indicated by using a 6-bit unsigned integer, in a unit of 1 cd/m², and a value range is 1 cd/m² to 65535 cd/m². When the target image is any frame in the image sequence or the video, a luma average value of luma of all pixels is first calculated in each frame of image in an image sequence or a video, and then a maximum value of the luma average value corresponding to each frame of image is the foregoing maximum average display luma.

Optionally, when there is only one frame of independent image, the maximum average display luma may be a default value. This is not limited in embodiments of this application.

As shown in FIG. 7, the bitstream includes a picture header, and the picture header carries static metadata. In other words, the first identifier to the fifth identifier and the static metadata may all be encoded into the picture header.

In some embodiments, when the target image is an image sequence or a frame in a video, to accurately render and display the target image, the image encoding method provided in this embodiment of this application further includes: encoding dynamic metadata of the target image into the bitstream, where the dynamic metadata includes color gamut volume change data of the target image.

The color gamut volume change data is used to describe data related to a change of content and a scenario in an image as time or a quantity of frames changes. The color gamut volume change data includes color change information, luma change information, and the like of the target image.

As shown in FIG. 7, the bitstream includes a picture header, and the picture header carries static metadata. That is, the first identifier to the fifth identifier, and the static metadata and/or the dynamic metadata may all be encoded into the picture header.

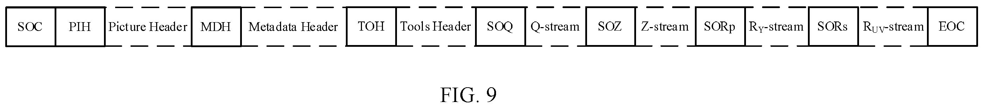

In some embodiments, in this embodiment of this application, when the static metadata and/or the dynamic metadata of the target image are/is encoded into the bitstream, as shown in FIG. 9, a metadata header may also be added to the bitstream, to carry the static metadata and/or the dynamic metadata of the target image based on the metadata header.

In some embodiments, in a case in which the bitstream includes a metadata substream corresponding to a metadata header, the metadata substream may also be used to carry the static metadata and the dynamic metadata of the target image.

It should be understood that, in this embodiment of this application, only data information of a target image that needs to be encoded into the bitstream is limited, for example, the first identifier to the fifth identifier, and the static metadata and/or the dynamic metadata, but a specific position of the data information when the data information is encoded into the bitstream is not limited. In other words, the picture header, the metadata header, and the metadata substream in the foregoing example may all carry related data information. Certainly, alternatively, all the foregoing data information may be carried only in the picture header, the metadata header, or the metadata substream. This is not limited in embodiments of this application.

Based on the foregoing embodiment, to carry the first identifier to the fifth identifier, and the static metadata and the dynamic metadata of the target image in the picture header of the bitstream, in this embodiment of this application, four syntax elements are added to the picture header of the bitstream, to carry image information and metadata information related to the target image. Table 5 shows an example of syntax elements of a picture header.

**Table 5**

| | |
|---|---|
| picture_header( ) { | Descriptor |
| PIH | u(16) |
| picture_header_size | u(16) |
| img_width | u(16) |
| img_height | u(16) |
| picture_format | u(2) |
| bit_depth | u(1) |
| bit_c_ver | u(1) |
| bit_c_hor | u(1) |
| bit_s_ver | u(1) |
| bit_s_hor | u(1) |
| coding_independent_code_points() | |
| mastering_display_color_volume () | |
| content_light_level_information () | |
| dynamic_metadata() | |
| color_transform_header() | |
| model_header() | |
| } | |

picture_header_size is used to define a space size of a picture header, and the picture header defines picture-related information, for example, img_width is a width of an encoded picture; img_height is a height of the encoded image; picture_format is a picture format, and is used to define a case in which the encoded picture is a YUV picture in a 4:4:4 sampling format, a YUV picture in a 4:2:2 sampling format, a YUV picture in a 4:2:0 sampling format, or an RGB picture; bit_depth is quantization information; and model_header() is syntax related to an encoder model. For specific meanings of these parameters, refer to related definitions of high-level syntax in the encoding file header in the JPEG-AI standard. Details are not described in this embodiment of this application.

In the foregoing picture header, coding_independent_code_points() is syntax newly added to carry an image feature in this application, mastering_display_color_volume () is syntax newly added to carry source device information in this application, content_light_level_information () is syntax newly added to carry image display information in this application, and dynamic_metadata() is syntax newly added to carry dynamic metadata of a target image in this embodiment of this application.

It should be noted that, in a syntax element table shown in this embodiment of this application, the right Descriptor column is a data type and bit information of a variable defined in corresponding syntax. For example, U(16) is a 16-bit unsigned integer.

In an example, a syntax element of the syntax coding_independent_code_points() of the image feature is shown in Table 6.

**Table 6**

| | |
|---|---|
| coding_independent_code_points() { | Descriptor |
| colour_primaries | u(8) |
| matrix_coefficients | u(8) |
| image_full_range_flag | u(1) |
| transfer_characteristics | u(16) |
| chroma420_sample_loc_type | u(8) |
| } | |

In Table 6, colour_primaries is a byte corresponding to the second identifier indicating the chroma coordinates of each primary color of the target image, matrix_coefficients is a byte corresponding to the fourth identifier indicating the coefficient of the conversion matrix used for performing color space conversion on the target image, image_full_range_flag is a byte corresponding to the third identifier indicating the pixel mapping range of the target image, transfer_characteristics is a byte corresponding to the first identifier indicating the optical-electro transfer function that matches the target image, and chroma420_sample_loc_type is a byte corresponding to the fifth identifier indicating the offset status of the sampling positions of the primary component of the target image and the secondary component of the target image.

In an example, a syntax element of source device information mastering_display_color_volume () is shown in Table 7.

**Table 7**

| | |
|---|---|
| mastering_display_color_volume() { | Descriptor |
| for i=0;i<3;i++ ) { | |
| mastering_display_colour_primaries_x [i] | u(16) |
| mastering_display_colour_primaries_y [i] | u(16) |
| } | |
| mastering_display_white_point_chromaticity_x | u(16) |
| mastering_display_white_point_chromaticity_y | u(16) |
| mastering_display_maximum_luminance | u(16) |
| mastering_display_minimum_luminance | u(16) |
| } | |

In Table 7, mastering_display_colour_primaries_x [i] and mastering_display_colour_primaries_y [i] are bytes corresponding to the chroma coordinates of the three primary colors of the mastering monitor, mastering_display_white_point_chromaticity_x and mastering_display_white_point _chromaticity_y are bytes corresponding to the chroma coordinates of the standard white light of the mastering monitor, mastering_display_maximum_luminance is a byte corresponding to a maximum display luma of the mastering monitor, and mastering_display_minimum_luminance is a minimum display luma of the mastering monitor.

In an example, a syntax element of image display information content_light_level_information() is shown in Table 8.

**Table 8**

| | |
|---|---|
| content_light_level_information() { | Descriptor |
| maximum_content_light level | u(16) |
| maximum_frame_average_light_level | u(16) |
| } | |

In Table 8, maximum_content_light_level is a byte corresponding to the maximum display luma of the target image, and maximum_frame_average_light_level is a byte corresponding to the maximum average display luma of the target image.

In an example, a syntax element of the dynamic metadata dynamic_metadata() is shown in Table 9.

**Table 9**

| | |
|---|---|
| dynamic_metadata{ | Descriptor |
| payloadSize = 0 | |
| while( next_bits( 8 ) = = 0xFF ) { | |
| payloadSize += 255 | |
| } | |
| last_payload_size_byte | u(8) |
| payloadSize += last_payload_size_byte | |
| itu_t_t35_information(payloadSize) { | |
| itu_t_t35_country_code | b(8) |
| if( itu_t_t35_country_code != 0xFF ) | |
| i = 1 | |
| else { | |
| itu_t_t35_country_code_extension_byte | b(8) |
| i = 2 | |
| } | |
| do { | |
| itu_t_t35_payload_byte | b(8) |
| i++ | |
| } while( i < payloadSize ) | |
| } | |

In Table 9 above, itu_t_t35_country_code is a byte with a value specified as a country code by ITU-T T.35 Appendix A, itu_t_t35_country_code_extension_byte should be a byte with a value specified as a country code by ITU-T T.35 Appendix B, itu_t_t35_payload_byte should be a byte including data registered in accordance with ITU-T T.35, and ITU-T T.35 terminal provider code and terminal provider oriented code (terminal provider oriented code) should be included in the first or more bytes of itu_t_t35_payload_byte. The format is specified by the authority that releases the terminal provider code. Any remaining itu_t_t35_payload_byte data shall be data with the syntax and semantics specified by an entity identified by the ITU-T T.35 country code and terminal provider code.

It should be understood that Table 5 is used as an example, and all data information added in this embodiment of this application is carried in the picture header. In specific application, Table 5 may be modified, to carry some data in the picture header. This is not limited in embodiments of this application.

Based on the foregoing embodiment, in this embodiment of this application, the metadata header of the bitstream may further carry the static metadata and the dynamic metadata of the target image. In an example, Table 10 below shows a syntax element of the metadata header.

**Table 10**

| | |
|---|---|
| metadata_header( ) { | Descriptor |
| MDH | u(16) |
| metadata_header_size | u(16) |
| static_metadata() | |
| dynamic_metadata() | |
| } | |

MDH is a metadata header marker, the metadata header is after the metadata header marker, and metadata_header_size is a size of the metadata header.

In an example, a syntax element table of the static metadata is shown in Table 11 below.

**Table 11**

| | |
|---|---|
| static_metadata{ | Descriptor |
| mastering_display_color_volume () | |
| content_light_level_information () | |
| } | |

For specific content of the syntax element of the mastering_display_color_volume (), refer to Table 7. For the syntax element of content_light_level_information (), refer to Table 8. Details are not described herein again.

In conclusion, when encoding the target image, the encoder may also encode the first identifier indicating the optical-electro transfer function that matches the target image into the bitstream, to meet a display requirement of both the SDR image and the HDR image on the decoder side, so that after obtaining the first identifier through decoding, the decoder can render and display the reconstructed image according to the corresponding optical-electro transfer function.

The following describes the image decoding method provided in embodiments of this application.

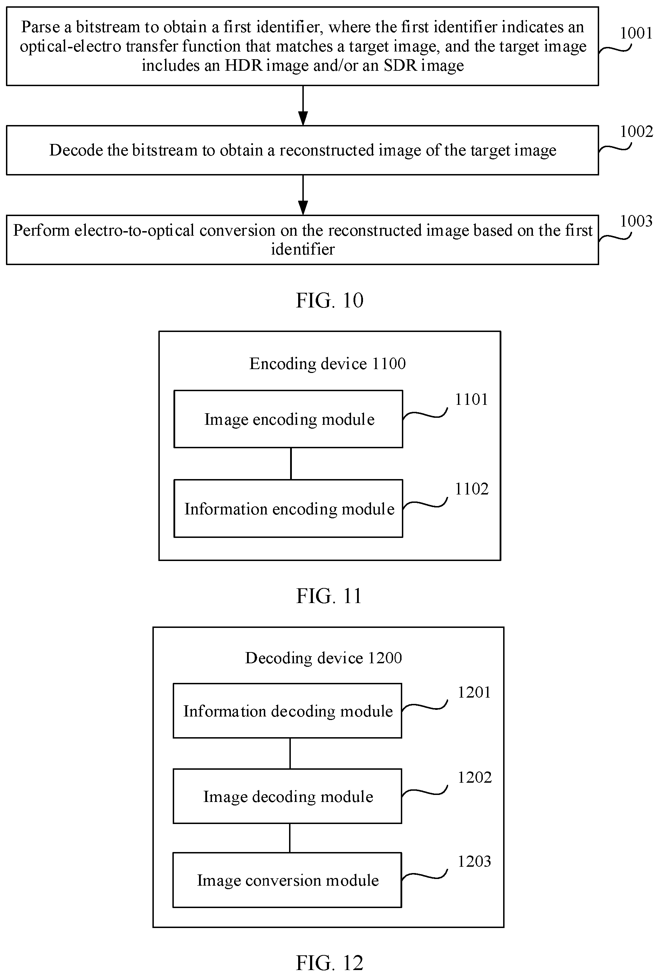

As shown in FIG. 10, this application provides an image decoding method. The method is applied to a decoder, and the method includes the following steps.

Step 1001: Parse a bitstream to obtain a first identifier, where the first identifier indicates an optical-electro transfer function that matches a target image, and the target image includes an HDR image and/or an SDR image.

The bitstream includes a picture header, and the first identifier is carried in the picture header.

Optionally, the bitstream includes a picture header, and a second identifier, a third identifier, and a fourth identifier are carried in the picture header. In this case, the second identifier, the third identifier, and the fourth identifier may be further parsed out from the bitstream.

The second identifier indicates chroma coordinates of each primary color of the target image, the third identifier indicates a mapping range of the target image, and the fourth identifier indicates a coefficient of a conversion matrix used for performing color space conversion on the target image.

Optionally, the bitstream includes a picture header, and a fifth identifier is carried in the picture header. In this case, the fifth identifier may be further parsed out from the bitstream.

Optionally, the bitstream includes a picture header, and static metadata and/or dynamic metadata of the target image are/is also carried in the picture header. In this case, the static metadata and/or the dynamic metadata of the target image may be parsed out from the bitstream.

Step 1002: Decode the bitstream to obtain a reconstructed image of the target image.

When the fifth identifier is parsed out from the bitstream, an implementation process of step 1002 may be: parsing the bitstream to obtain a reconstructed image of a primary component of the target image and a reconstructed image of a secondary component of the target image; and performing upsampling on the reconstructed image of the primary component and the reconstructed image of the secondary component based on the fifth identifier to obtain the reconstructed image.

Optionally, when the second identifier, the third identifier, and the fourth identifier are parsed out from the bitstream, before performing step 1003, the decoder determines, based on the second identifier, the third identifier, and the fourth identifier and by searching Table 1 to Table 3, a conversion matrix used when an encoder side performs color space conversion on the target image, to perform inverse color space conversion on the reconstructed image based on the conversion matrix.

Step 1003: Perform electro-to-optical conversion on the reconstructed image based on the first identifier.

In some embodiments, when the static metadata of the target image is parsed out from the bitstream, tone mapping may be performed on the reconstructed image based on the static metadata, to display the reconstructed image.

In some embodiments, when the dynamic metadata of the target image is parsed out from the bitstream, tone mapping may be performed on the reconstructed image based on the dynamic metadata, to display the reconstructed image.

It should be noted that, when the decoder performs the image decoding method, for specific meanings and execution sequences of related technical features, refer to the foregoing embodiment in which the encoder performs the image encoding method. Details are not described herein again.

In conclusion, when decoding the bitstream, the decoder may determine, based on the first identifier obtained through decoding, the optical-electro transfer function that matches the target image, so that the reconstructed image of the target image is accurately rendered and displayed according to the optical-electro transfer function, to meet a display requirement of both the SDR image and the HDR image on a decoder side, and ensure accuracy of displaying the target image.

FIG. 11 is a diagram of a structure of an encoding device according to an embodiment of this application. The encoding device may be the encoder shown in FIG. 1. As shown in FIG. 11, the encoding device 1100 includes an image encoding module 1101 and an information encoding module 402.

The image encoding module 1101 is configured to encode a target image into a bitstream.

The information encoding module 1102 is configured to encode a first identifier into the bitstream, where the first identifier indicates an optical-electro transfer function that matches the target image, and the target image includes a high dynamic range HDR image and/or a standard dynamic range SDR image.

Optionally, the bitstream includes a picture header, and the first identifier is encoded into the picture header.

Optionally, the information encoding module 1102 is further configured to:
encode a second identifier into the bitstream, where the second identifier indicates chroma coordinates of each primary color of the target image;
encode a third identifier into the bitstream, where the third identifier indicates a pixel mapping range of the target image; and
encode a fourth identifier into the bitstream, where the fourth identifier indicates a coefficient of a conversion matrix used for performing color space conversion on the target image.

Optionally, the apparatus further includes:
an image conversion module, configured to perform color space conversion on the target image based on the second identifier, the third identifier, and the fourth identifier.

Optionally, the bitstream includes a picture header, and the second identifier, the third identifier, and the fourth identifier are encoded into the picture header.

Optionally, the information encoding module 1102 is further configured to:
encode a fifth identifier into the bitstream, where the fifth identifier indicates an offset status of sampling positions of a primary component of the target image and a secondary component of the target image.

Optionally, after color space conversion is performed on the target image, the target image includes an image of the primary component and an image of the secondary component; and the apparatus further includes:
a downsampling module, configured to perform downsampling on the image of the primary component and the image of the secondary component based on the fifth identifier.

The image encoding module 1101 is specifically configured to:
encode a downsampled image of the primary component and a downsampled image of the secondary component into the bitstream.

Optionally, the bitstream includes a picture header, and the fifth identifier is encoded into the picture header.

Optionally, the information encoding module 1102 is further configured to:
encode static metadata of the target image into the bitstream, where the static metadata includes source device information and image display information, the source device information indicates color information of a mastering monitor that generates the target image, and the image display information indicates display luma of the target image.

Optionally, the source device information includes at least one of chroma coordinates of three primary colors, chroma coordinates of standard white light, maximum display luma, and minimum display luma of the mastering monitor.

Optionally, the image display information includes at least one of maximum display luma or maximum average display luma of the target image.

Optionally, the bitstream includes a picture header, and the picture header carries the static metadata; or the bitstream includes a metadata header, and the metadata header carries the static metadata; or the bitstream includes a metadata substream corresponding to a metadata header, and the metadata substream carries the static metadata.

Optionally, the information encoding module 1102 is further configured to:
encode dynamic metadata of the target image into the bitstream, where the dynamic metadata includes color gamut volume change data of the target image.

Optionally, the bitstream includes a picture header, and the picture header carries the dynamic metadata; or the bitstream includes a metadata header, and the metadata header carries the dynamic metadata; or the bitstream includes a metadata substream corresponding to a metadata header, and the metadata substream carries the dynamic metadata.

In this embodiment of this application, when encoding the target image, the encoding device may also encode, into the bitstream, the first identifier indicating the optical-electro transfer function that matches the target image, to meet a display requirement of both the SDR image and the HDR image on a decoder side, so that after obtaining the first identifier through decoding, a decoder can render and display the reconstructed image according to the corresponding optical-electro transfer function.

It should be noted that, during image encoding by the encoding device provided in the foregoing embodiment, division of the foregoing functional modules is merely used as an example for description. In practice, the foregoing functions may be allocated to different functional modules and implemented based on a requirement. To be specific, an internal structure of the apparatus is divided into different functional modules, to implement all or some of the functions described above. In addition, the encoding device provided in the foregoing embodiment and the image encoding method embodiment belong to a same concept. For details about a specific implementation process of the encoding device, refer to the method embodiment. Details are not described herein again.

FIG. 12 is a diagram of a structure of a decoding device according to an embodiment of this application. The decoding device may be the decoder shown in FIG. 1. As shown in FIG. 12, the apparatus includes an information decoding module 1201, an image decoding module 1202, and an image conversion module 1203.

The information decoding module 1201 is configured to parse a bitstream to obtain a first identifier, where the first identifier indicates an optical-electro transfer function that matches a target image, and the target image includes a high dynamic range HDR image and/or a standard dynamic range SDR image.

The image decoding module 1202 is configured to decode the bitstream to obtain a reconstructed image of the target image.

The image conversion module 1203 is configured to perform electro-to-optical conversion on the reconstructed image based on the first identifier.

Optionally, the bitstream includes a picture header, and the first identifier is carried in the picture header.

Optionally, the information decoding module 1201 is further configured to:
parse the bitstream to obtain a second identifier, where the second identifier indicates chroma coordinates of each primary color of the target image;
parse the bitstream to obtain a third identifier, where the third identifier indicates a mapping range of the target image; and
parse the bitstream to obtain a fourth identifier, where the fourth identifier indicates a coefficient of a conversion matrix used for performing color space conversion on the target image.

Optionally, the apparatus further includes:
an image inverse conversion module, configured to perform inverse color space conversion on the reconstructed image based on the second identifier, the third identifier, and the fourth identifier.

Optionally, the bitstream includes a picture header, and the second identifier, the third identifier, and the fourth identifier are carried in the picture header.

Optionally, the information decoding module 1201 is further configured to:
parse the bitstream to obtain a fifth identifier, where the fifth identifier indicates an offset status of sampling positions of a primary component of the target image and a secondary component of the target image.

Optionally, the image decoding module 1202 is specifically configured to:
parse the bitstream to obtain a reconstructed image of the primary component of the target image and a reconstructed image of the secondary component of the target image; and
performing upsampling on the reconstructed image of the primary component and the reconstructed image of the secondary component based on the fifth identifier to obtain the reconstructed image.

Optionally, the bitstream includes a picture header, and the fifth identifier is carried in the picture header.

Optionally, the information decoding module 1201 is further configured to:
parse the bitstream to obtain static metadata of the target image, where the static metadata includes source device information and image display information, the source device information indicates color information of a mastering monitor that generates the target image, and the image display information indicates display luma of the target image.

Optionally, the apparatus further includes:
a tone mapping module, configured to perform tone mapping on the reconstructed image based on the static metadata.

Optionally, the source device information includes at least one of chroma coordinates of three primary colors, chroma coordinates of standard white light, maximum display luma, and minimum display luma of the mastering monitor.

Optionally, the image display information includes at least one of maximum display luma or maximum average display luma of the target image.

Optionally, the bitstream includes a picture header, and the picture header carries the static metadata; or the bitstream includes a metadata header, and the metadata header carries the static metadata; or the bitstream includes a metadata substream corresponding to a metadata header, and the metadata substream carries the static metadata.

Optionally, the information decoding module 1201 is further configured to:
parse the bitstream to obtain dynamic metadata of the target image, where the dynamic metadata includes color gamut volume change data of the target image.

Optionally, the tone mapping module is further configured to:
perform tone mapping on the reconstructed image based on the static metadata and the dynamic metadata.

Optionally, the bitstream includes a picture header, and the picture header carries the dynamic metadata; or the bitstream includes a metadata header, and the metadata header carries the dynamic metadata; or the bitstream includes a metadata substream corresponding to a metadata header, and the metadata substream carries the dynamic metadata.

In this embodiment of this application, when decoding the bitstream, the decoding device may determine, based on the first identifier obtained through decoding, the optical-electro transfer function that matches the target image may be determined based on the first identifier obtained through decoding, so that the reconstructed image of the target image is accurately rendered and displayed according to the optical-electro transfer function, to meet a display requirement of both the SDR image and the HDR image on a decoder side, and ensure accuracy of displaying the target image.

It should be noted that, during image decoding by the decoding device provided in the foregoing embodiment, division of the foregoing functional modules is merely used as an example for description. In practice, the foregoing functions may be allocated to different functional modules and implemented based on a requirement. To be specific, an internal structure of the apparatus is divided into different functional modules, to implement all or some of the functions described above. In addition, the decoding device provided in the foregoing embodiment and the image decoding method embodiment belong to a same concept. For details about a specific implementation process of the decoding device, refer to the method embodiment. Details are not described herein again.

An embodiment of this application further provides an encoding device. The encoding device includes a processor, the processor is coupled to a memory, the memory is configured to store a program or instructions, and when the program or the instructions are executed by the processor, the encoding device is enabled to perform the foregoing image encoding method.

An embodiment of this application further provides a decoding device. The decoding device includes a processor, the processor is coupled to a memory, the memory is configured to store a program or instructions, and when the program or the instructions are executed by the processor, the decoding device is enabled to perform the foregoing image decoding method.

An embodiment of this application further provides an encoding and decoding system. The encoding and decoding system includes the encoding device and/or the decoding device.

An embodiment of this application further provides a computer-readable storage medium, including program code. When the program code is run on a computer, the computer is enabled to perform the foregoing image encoding method.

An embodiment of this application further provides a computer-readable storage medium, including program code. When the program code is run on a computer, the computer is enabled to perform the foregoing image decoding method.

An embodiment of this application further provides a computer program product, including instructions. When the instructions are run on a computer, the computer is enabled to perform the foregoing image encoding method.

An embodiment of this application further provides a computer program product, including instructions. When the instructions are run on a computer, the computer is enabled to perform the foregoing image decoding method.

An embodiment of this application further provides a computer-readable storage medium. The computer-readable storage medium stores a bitstream obtained according to the foregoing image encoding method.

An embodiment of this application further provides a bitstream storage device, including at least one storage medium and a communication interface. The communication interface is configured to receive or send a bitstream. The at least one storage medium is configured to store the bitstream. The bitstream is obtained by an encoder through encoding according to the foregoing image encoding method.

An embodiment of this application further provides a bitstream storage method, including: receiving a bitstream through a communication interface; and storing the bitstream in one or more storage media. The bitstream is obtained by an encoder through encoding according to the foregoing image encoding method.

An embodiment of this application further provides a bitstream distribution system, including at least one storage medium and a video stream device. The at least one storage medium is configured to store a bitstream, and the bitstream is obtained by an encoder through encoding according to the foregoing image encoding method. The video stream device is configured to send the bitstream in the at least one storage medium to a decoder in response to a request of the decoder.

An embodiment of this application further provides a bitstream distribution method, including: receiving a first request; selecting a bitstream from at least one storage medium in response to the first request; and sending the bitstream to a destination device. The at least one storage medium is configured to store a bitstream, and the bitstream is obtained by an encoder through encoding according to the foregoing image encoding method.

An embodiment of this application further provides a bitstream processing system, including an image source device, an encoder, one or more storage media, and a destination device. The image source device is configured to provide image data. The encoder is configured to: obtain the image data of the image source device through an interface, and encode the image data to obtain one or more bitstreams, where the bitstream is obtained by the encoder through encoding according to the foregoing image encoding method. The encoder is configured to store the one or more bitstreams in the one or more storage media. Alternatively, the encoder is configured to encapsulate the one or more bitstreams to obtain a transmission bitstream. The encoder is configured to transmit the transmission bitstream to the destination device through a communication link or a communication network. The destination device is configured to decapsulate the transmission bitstream to obtain the one or more bitstreams. The destination device is configured to decode the one or more bitstreams to obtain decoded data.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device like a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state disk, SSD)), or the like. It should be noted that the computer-readable storage medium mentioned in embodiments of this application may be a non-volatile storage medium, or in other words, may be a non-transitory storage medium.

It should be understood that "a plurality of" in this specification means two or more. In descriptions of embodiments of this application, "/" means "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

It should be noted that information (including but not limited to user equipment information, personal information of a user, and the like), data (including but not limited to data used for analysis, stored data, displayed data, and the like), and signals in embodiments of this application are used under authorization by the user or full authorization by all parties, and collection, use, and processing of related data need to conform to related laws, regulations, and standards of related countries and areas.

The foregoing descriptions are merely embodiments of this application, but are not intended to limit this application. Any modification, equivalent replacement, or improvement made without departing from the spirit and principle of this application should fall within the protection scope of this application.

## Claims

1. An image encoding method, wherein the method comprises:
encoding a target image into a bitstream; and
encoding a first identifier into the bitstream, wherein the first identifier indicates an optical-electro transfer function that matches the target image, and the target image comprises a high dynamic range HDR image and/or a standard dynamic range SDR image.

2. The method according to claim 1, wherein the bitstream comprises a picture header, and the first identifier is encoded into the picture header.

3. The method according to claim 1 or 2, wherein the method further comprises:
encoding a second identifier into the bitstream, wherein the second identifier indicates chroma coordinates of each primary color of the target image;
encoding a third identifier into the bitstream, wherein the third identifier indicates a pixel mapping range of the target image; and
encoding a fourth identifier into the bitstream, wherein the fourth identifier indicates a coefficient of a conversion matrix used for performing color space conversion on the target image.

4. The method according to claim 3, wherein before encoding the target image into the bitstream, the method further comprises:
performing color space conversion on the target image based on the second identifier, the third identifier, and the fourth identifier.

5. The method according to claim 3 or 4, wherein the bitstream comprises a picture header, and the second identifier, the third identifier, and the fourth identifier are encoded into the picture header.

6. The method according to any one of claims 1 to 5, wherein the method further comprises:
encoding a fifth identifier into the bitstream, wherein the fifth identifier indicates an offset status of sampling positions of a primary component of the target image and a secondary component of the target image.

7. The method according to claim 6, wherein after color space conversion is performed on the target image, the target image comprises an image of the primary component and an image of the secondary component; and before encoding the target image into the bitstream, the method further comprises:
performing downsampling on the image of the primary component and the image of the secondary component based on the fifth identifier; and
encoding the target image into the bitstream comprises:
encoding a downsampled image of the primary component and a downsampled image of the secondary component into the bitstream.

8. The method according to claim 6 or 7, wherein the bitstream comprises a picture header, and the fifth identifier is encoded into the picture header.

9. The method according to any one of claims 1 to 8, wherein the method further comprises:
encoding static metadata of the target image into the bitstream, wherein the static metadata comprises source device information and image display information, the source device information indicates color information of a mastering monitor that generates the target image, and the image display information indicates display luma of the target image.

10. The method according to claim 9, wherein the source device information comprises at least one of chroma coordinates of three primary colors, chroma coordinates of standard white light, maximum display luma, and minimum display luma of the mastering monitor.

11. The method according to claim 9 or 10, wherein the image display information comprises at least one of maximum display luma or maximum average display luma of the target image.

12. The method according to any one of claims 9 to 11, wherein the bitstream comprises a picture header, and the picture header carries the static metadata; or the bitstream comprises a metadata header, and the metadata header carries the static metadata; or the bitstream comprises a metadata substream corresponding to a metadata header, and the metadata substream carries the static metadata.

13. The method according to any one of claims 9 to 12, wherein the method further comprises:
encoding dynamic metadata of the target image into the bitstream, wherein the dynamic metadata comprises color gamut volume change data of the target image.

14. The method according to claim 13, wherein the bitstream comprises a picture header, and the picture header carries the dynamic metadata; or the bitstream comprises a metadata header, and the metadata header carries the dynamic metadata; or the bitstream comprises a metadata substream corresponding to a metadata header, and the metadata substream carries the dynamic metadata.

15. An image decoding method, wherein the method comprises:
parsing a bitstream to obtain a first identifier, wherein the first identifier indicates an optical-electro transfer function that matches a target image, and the target image comprises a high dynamic range HDR image and/or a standard dynamic range SDR image;
decoding the bitstream to obtain a reconstructed image of the target image; and
performing electro-to-optical conversion on the reconstructed image based on the first identifier.

16. The method according to claim 15, wherein the bitstream comprises a picture header, and the first identifier is carried in the picture header.

17. The method according to claim 15 or 16, wherein the method further comprises:
parsing the bitstream to obtain a second identifier, wherein the second identifier indicates chroma coordinates of each primary color of the target image;
parsing the bitstream to obtain a third identifier, wherein the third identifier indicates a mapping range of the target image; and
parsing the bitstream to obtain a fourth identifier, wherein the fourth identifier indicates a coefficient of a conversion matrix used for performing color space conversion on the target image.

18. The method according to claim 17, wherein before performing electro-to-optical conversion on the reconstructed image based on the first identifier, the method further comprises:
performing inverse color space conversion on the reconstructed image based on the second identifier, the third identifier, and the fourth identifier.

19. The method according to claim 17 or 18, wherein the bitstream comprises a picture header, and the second identifier, the third identifier, and the fourth identifier are carried in the picture header.

20. The method according to any one of claims 15 to 19, wherein the method further comprises:
parsing the bitstream to obtain a fifth identifier, wherein the fifth identifier indicates an offset status of sampling positions of a primary component of the target image and a secondary component of the target image.

21. The method according to claim 20, wherein parsing the bitstream to obtain the reconstructed image of the target image comprises:
parsing the bitstream to obtain a reconstructed image of the primary component of the target image and a reconstructed image of the secondary component of the target image; and
performing upsampling on the reconstructed image of the primary component and the reconstructed image of the secondary component based on the fifth identifier to obtain the reconstructed image.

22. The method according to claim 20 or 21, wherein the bitstream comprises a picture header, and the fifth identifier is carried in the picture header.

23. The method according to any one of claims 15 to 22, wherein the method further comprises:
parsing the bitstream to obtain static metadata of the target image, wherein the static metadata comprises source device information and image display information, the source device information indicates color information of a mastering monitor that generates the target image, and the image display information indicates display luma of the target image.

24. The method according to claim 23, wherein the method further comprises:
performing tone mapping on the reconstructed image based on the static metadata.

25. The method according to claim 23 or 24, wherein the source device information comprises at least one of chroma coordinates of three primary colors, chroma coordinates of standard white light, maximum display luma, and minimum display luma of the mastering monitor.

26. The method according to any one of claims 23 to 25, wherein the image display information comprises at least one of maximum display luma or maximum average display luma of the target image.

27. The method according to any one of claims 23 to 26, wherein the bitstream comprises a picture header, and the picture header carries the static metadata; or the bitstream comprises a metadata header, and the metadata header carries the static metadata; or the bitstream comprises a metadata substream corresponding to a metadata header, and the metadata substream carries the static metadata.

28. The method according to any one of claims 23 to 27, wherein the method further comprises:
parsing the bitstream to obtain dynamic metadata of the target image, wherein the dynamic metadata comprises color gamut volume change data of the target image.

29. The method according to claim 28, wherein the method further comprises:
performing tone mapping on the reconstructed image based on the static metadata and the dynamic metadata.

30. The method according to claim 29, wherein the bitstream comprises a picture header, and the picture header carries the dynamic metadata; or the bitstream comprises a metadata header, and the metadata header carries the dynamic metadata; or the bitstream comprises a metadata substream corresponding to a metadata header, and the metadata substream carries the dynamic metadata.

31. An encoding device, wherein the encoding device comprises:
an image encoding module, configured to encode a target image into a bitstream; and
an information encoding module, configured to encode a first identifier into the bitstream, wherein the first identifier indicates an optical-electro transfer function that matches the target image, and the target image comprises a high dynamic range HDR image and/or a standard dynamic range SDR image.

32. A decoding device, wherein the decoding device comprises:
an information decoding module, configured to parse a bitstream to obtain a first identifier, wherein the first identifier indicates an optical-electro transfer function that matches a target image, and the target image comprises a high dynamic range HDR image and/or a standard dynamic range SDR image;
an image decoding module, configured to decode the bitstream to obtain a reconstructed image of the target image; and
an image conversion module, configured to perform electro-to-optical conversion on the reconstructed image based on the first identifier.

33. An encoding device, wherein the encoding device comprises a processor, the processor is coupled to a memory, the memory is configured to store a program or instructions, and when the program or the instructions are executed by the processor, the encoding device is enabled to perform the method according to any one of claims 1 to 14.

34. A decoding device, wherein the decoding device comprises a processor, the processor is coupled to a memory, the memory is configured to store a program or instructions, and when the program or the instructions are executed by the processor, the decoding device is enabled to perform the method according to any one of claims 15 to 30.

35. An encoding and decoding system, wherein the encoding and decoding system comprises the encoding device according to claim 33 and/or the decoding device according to claim 34.

36. A computer-readable storage medium, comprising program code, wherein when the program code is run on a computer, the computer is enabled to perform the image encoding method according to any one of claims 1 to 14.

37. A computer-readable storage medium, comprising program code, wherein when the program code is run on a computer, the computer is enabled to perform the image decoding method according to any one of claims 15 to 30.

38. A computer program product, comprising instructions, wherein when the instructions are run on a computer, the computer is enabled to perform the method according to any one of claims 1 to 14.

39. A computer program product, comprising instructions, wherein when the instructions are run on a computer, the computer is enabled to perform the method according to any one of claims 15 to 30.

40. A computer-readable storage medium, wherein the computer-readable storage medium stores a bitstream obtained by one or more processors by performing the method according to any one of claims 1 to 14.

41. A bitstream storage device, comprising at least one storage medium and a communication interface, wherein
the communication interface is configured to receive or send a bitstream;
the at least one storage medium is configured to store the bitstream; and
the bitstream is obtained by an encoder through encoding according to the image encoding method according to any one of claims 1 to 14.

42. A bitstream storage method, comprising:
receiving a bitstream through a communication interface; and
storing the bitstream in one or more storage media, wherein the bitstream is obtained by an encoder through encoding according to the image encoding method according to any one of claims 1 to 14.

43. A bitstream distribution system, comprising at least one storage medium and a video stream device, wherein
the at least one storage medium is configured to store a bitstream, and the bitstream is obtained by an encoder through encoding according to the image encoding method according to any one of claims 1 to 14; and
the video stream device is configured to send the bitstream in the at least one storage medium to a decoder in response to a request of the decoder.

44. A bitstream distribution method, comprising:
receiving a first request;
selecting a bitstream from at least one storage medium in response to the first request; and
sending the target bitstream to a destination device, wherein
the at least one storage medium is configured to store a bitstream, and the bitstream is obtained by an encoder through encoding according to the image encoding method according to any one of claims 1 to 14.

45. A bitstream processing system, comprising an image source device, an encoding device, one or more storage media, and a destination device, wherein
the image source device is configured to provide image data;
the encoding device is configured to: obtain the image data of the image source device through an interface, and encode the image data to obtain one or more bitstreams, wherein the bitstream is obtained by the encoder through encoding according to the image encoding method according to any one of claims 1 to 14;
the encoding device is configured to store the one or more bitstreams in the one or more storage media; or
the encoding device is configured to encapsulate the one or more bitstreams to obtain a transmission bitstream;
the encoding device is configured to transmit the transmission bitstream to the destination device through a communication link or a communication network;
the destination device is configured to decapsulate the transmission bitstream to obtain the one or more bitstreams; and
the destination device is configured to decode the one or more bitstreams to obtain decoded data.
